# EUROPÄISCHE PATENTSCHRIFT

(11) **EP 1 817 372 B1**
(45) Veröffentlichungstag und Bekanntmachung des Hinweises auf die Patenterteilung: **30.09.2009**
(21) Anmeldenummer: 05767962.3
(22) Anmeldetag: 27.07.2005
(51) Int. Cl.: C08K 5/56, C08L 83/04

(54) **VERWENDUNG LICHTAKTIVIERBARER, HAERTBARER SILIKONZUSAMMENSETZUNGEN ZUR HERSTELLUNG VON DICKWANDIGEN FORMARTIKELN ODER DICKWANDIGEN BESCHICHTUNGEN**
USE OF LIGHT-ACTIVATED HARDENABLE SILICON COMPOSITIONS FOR THE PRODUCTION OF THICK-WALLED MOULDED ARTICLES OR THICK-WALLED COATINGS
UTILISATION DE COMPOSITIONS DE SILICONE PHOTOACTIVABLES, DURCISSABLES, POUR LA FABRICATION D'ARTICLES MOULES A PAROI EPAISSE OU DE REVETEMENTS A PAROI EPAISSE

(30) Priorität: 28.07.2004 DE 102004036573
(43) Veröffentlichungstag der Anmeldung: 15.08.2007
(73) Patentinhaber: Momentive Performance Materials GmbH, 51368 Leverkusen (DE)
(72) Erfinder: RIST, Stefan, 51381 Leverkusen (DE); BOSSHAMMER, Stephan, 50679 Köln (DE); PUTZER, Markus, 51375 Leverkusen (DE); NAUMANN, Thomas, 51371 Leverkusen (DE); IRMER, Uwe, 42799 Leichlingen (DE)
(74) Vertreter: Roos, Peter
(86) Internationale Anmeldenummer: PCT/EP2005/053653
(87) Internationale Veröffentlichungsnummer: WO 2006/010763

(56) Entgegenhaltungen:
- EP-A- 0 832 936
- US-A- 4 510 094
- US-A- 6 046 250

## Beschreibung

Die vorliegende Erfindung betrifft die Verwendung lichtaktivierbarer, härtbarer bzw. vernetzbarer Silikonzusammensetzungen zur Herstellung von dickwandigen Formartikeln, wie Formen für Abgussmassen, Ver-gussmassen, Dichtstoffen, prothetischen Formartikeln oder Abformungen Formed-in-Place-Gaskets und Verfahren zu deren Herstellung.
Dickwandige Formkörper oder Beschichtungen können aus thermoplastischen, duroplastischen oder elastomeren Werkstoffen bestehen, die aus den entsprechend härtbaren Formassen bzw. Kautschuken nach Umformung unter Wärmeeinwirkung oder Vernetzung von Reaktivharzen oder Kautschukmischungen formgebend hergestellt werden. Bei der Anwendung von Wärme bei der Formgebung bzw. Vernetzung beobachtet man Schrumpfeffekte, die eine formgetreue Abformung verhindern. Der Schrumpf führt nicht nur zu fehlender Formtreue, sondern zu Entformungsproblemen bei der Entnahme der Formartikel aus der Form oder zu Abriss vom abzudichtenden Gegenstand, wie Dichtrinnen, einzubettende Gegenstände, wie elektronische Schaltungen, Kabelstecker usw.. Großvolumige bzw. dickwandige Teile mit Wandstärken von mehr als 10 mm oder einem Volumen von mehr als 1 Liter, wie Isolatoren, stellen ein besonderes Problem dar, weil hier Schrumpfeffekte besonders deutlich hervortreten und die Härtung kurzfristig bis in große Tiefen, bei gleichzeitiger Anwesenheit von Füllstoffen und Pigmenten, über thermische Härtung nicht gewährleistet ist. Deshalb ist eine Härtung bei der Gebrauchstemperatur des Formkörpers bzw. der Beschichtung erwünscht, um einen Schrumpfeffekt durch thermische Expansion möglichst gering zu halten. Die Härtungstemperatur sollte somit üblicherweise bei der Umgebungstemperatur von 0 bis 50°C liegen. Das bedeutet, dass die Härtung derartiger Formartikel oder Beschichtungen mit Additionsreaktionen bevorzugt herbeigeführt wird, d.h. mit Vernetzungsmechanismen, die keinen Masseverlust beim Härten hervorrufen.

Weiterhin soll die für Härtung der Formmasse notwendige Temperatur nur unwesentlich die Umgebungstemperatur übersteigen.
Wenn man dickwandige Formartikel und Beschichtungen aus Silikonformmassen also Silikon-Harzen oder -Kautschuken herstellen will, kann man prinzipiell auf die Reaktionen der Radikal-, Additions-, Kondensations- oder verschiedene Formen der Photovernetzung zurückgreifen. Als Vernetzungsarten, die keine zusätzliche Erwärmung benötigen, kommen die Kondensations-, Additions- und Photovernetzung in Frage.
Wegen des Masseverlustes von Kondensationsprodukten wird man zweckmäßig für die Lösung der Aufgabe die Additions- und Photoreaktionen eingehender in Betracht ziehen.
Die durch Inhibitoren gesteuerte Additionsreaktion, bei der eine Hydrosilylierungsreaktion zur Vernetzung der Formmassen führt, benötigt einen Inhibitor, um eine gewisse Verarbeitungszeit der reaktionsfähigen Masse zu gewährleisten. Das bedingt aber längere Vernetzungszeiten oder Erwärmung. Verzichtet man auf den Inhibitor, hat man zwar kurze Vernetzungszeiten, man nimmt jedoch gleichfalls kurze Verarbeitungszeiten für die reaktiven, vernetzungsfähigen Formmassen in Kauf.
Man kann also üblicherweise nicht die Vernetzungszeit von der Verarbeitungszeit vor Vernetzungsbeginn entkoppeln.
Unter den verschiedenen verfügbaren Arten der photoaktivierten Vernetzung gibt es Systeme, die aufwändige, organofunktionelle Polymersysteme erfordern. Es gibt aber hierunter auch Systeme, die im wesentlichen aus leichter verfügbaren Polyalkenylalkylsiloxanen und Polyhydrogenalkylsiloxanen bestehen.
Für die Verwendung bekannter Silkonformmassen, die durch Lichtaktivierung gehärtet werden können, gab es bisher Grenzen, wenn diese für die Herstellung von dickwandigen, großvolumigen und zusätzlich pigmentierten Formmassen angewendet und diese in kurzer Zeit gehärtet werden sollten oder zusätzlich gefordert wurde, die nicht belichteten Bereiche, also Schattenbereichen, ebenfalls auszuhärten.

Es wurden keine Zusammensetzungen bzw. Verfahren vorgeschlagen, wie man dickwandige, großvolumige Formartikel und Beschichtungen auf diesem Wege verwirklichen kann, insbesondere wenn diese weitere Füllstoffe enthalten sollen und spezielle Anforderungen bezüglich der mechanischen Festigkeit oder der Festigkeit gegenüber zerstörenden Hochspannungsbelastungen überstehen sollen. Diese Anforderungen müssen jedoch Formteile wie dickwandige, großvolumige Isolatoren oder Beschichtungen erfüllen.
Im Stand der Technik sind Kombinationen von verschiedenen Vernetzungsreaktionen offenbart und beansprucht worden, um das Problem zu lösen. So beschreibt US 4 699 802 eine Vernetzung von Polydihydrocarbylsiloxanprepolymer mit Acrylat- oder Methacrylatgruppen in Verbindung mit einem radikalischen Photoinitiator. Hierbei findet eine Vernetzung des Polymers in den UV-belichteten Zonen statt. In den nicht belichteten Zonen bewirkt eine Härtung mittels Luftfeuchtigkeit die Vernetzung. Nachteilig sind hier die lange Nachhärtungszeit infolge der langsamen Diffusion von Luftfeuchtigkeit zu den unbelichteten Zonen, der Masseverlust durch Kondensations- bzw. Spaltprodukte sowie die Notwendigkeit des Einsatzes von aufwändig herzustellenden Siloxan-Acrylat-Copolymeren begrenzen die Verfügbarkeit und Wirtschaftlichkeit. Dieses Verfahren kann außerdem nicht eingesetzt werden, wenn nach der UV-Belichtung eines geschlossenen Bauteils der Zutritt von Luftfeuchtigkeit in die be- und unbelichteten Bereiche ausgeschlossen bleibt.
Ein sehr einfaches Additionssystem wird hingegen von der EP 0146307 A1 offenbart, wobei man mit einem photoaktivierten Platinkomplex, ausgewählt aus Komplexen mit eta-Cyclopentadienyl- und 3 sigma-gebundenen aliphatischen Substituenten, klebstoffabweisende Beschichtungen (Trennpapiere) im Mikrometerbereich liegende Schichten erzeugen konnte. Wie man dickwandige, füllstoff- und/oder pigmenthaltige Formkörper oder Beschichtungen herstellen kann, wurde in diesem Dokument nicht offenbart. Dickwandige Formartikel oder Beschichtungen mit Schichtdicken von mehreren Millimetern bzw. guten mechanischen Eigenschaften durch einfaches Giessen oder Schichtauftrag herzustellen, ist insbesondere deswegen problematisch, weil diese in der Regel den Zusatz von verdickenden bzw. verstärkenden Füllstoffen erfordern. Füllstoffe können wiederum die Transparenz in Abhängigkeit von der Schichtdicke drastisch herabsetzen und damit den Eintritt des Lichtes in tiefe Schichten verhindern. Insbesondere war es daher nach dem in der EP 0146307 beschriebenen Verfahren nicht möglich pigmentierte oder hochgefüllte dickwandige Formkörper oder Beschichtungen mit hoher Festigkeit herzustellen. Weiterhin hätte der Fachmann erwartet, dass er zur Härtung dickwandiger Formartikel oder Beschichtungen extrem große Platinmengen benötigt werden, um zu einer ausreichend schnellen und vollständigen Vernetzung zu gelangen. Dem Fachmann wird somit die Verwendung der lichthärtbaren Zusammensetzungen der EP 0146307 für die Herstellung dickwandiger Formartikel oder Beschichtungen, geschweige denn pigmentierter, opaker oder transluzenter Formartikel oder Beschichtungen nicht nahegelegt.
Die EP 358 452 A schlägt daher den Weg ein, dickwandige Formartikel, wie Dentalabformmassen, unter Zuhilfenahme von zusätzlichen Photosensibilisatoren herzustellen. Ähnliche Silikonformmassen, die unter Verwendung von zusätzlichen Photosensibilisatoren hergestellt werden, offenbaren die US 6 376 569 B1 (EP 561 893 B1) die US 6 046 250 A (EP 561 919 B1) oder die WO 92-10544 A1 (EP 561 923 A1). Dieses Verfahren ist jedoch nachteilig, da die Verwendung der zusätzlichen Photosensibilisatoren unter ökologischen und ökonomischen Gesichtspunkten nachteilig sein kann.
Die EP 832936 offenbart lichthärtbare, flüssige Silikonkautschuk-Zusammensetzung zur Herstellung einer Masterform, die ihrerseits zum Formen eines lichthärtbaren flüssigen Harzes dient. Das gehärtete Produkt muß eine Lichtdurchlässigkeit für Licht einer Wellenlänge von 200 bis 500 nm, gemessen bei einer Dicke von 10 mm, von mindestens 10 % aufweisen, da sonst die Lichtdurchlässigkeit zur Härtung der lichthärtbaren flüssigen Harze des Replikates zu gering ist. Dadurch, dass die Erfinder der EP 832 936 von vornherein auf die Herstellung lichtdurchlässiger Masterformen abzielten, stellte sich dort das Problem der Herstellung weniger transparenter, insbesondere füllstoff- bzw. pigmenthaltiger dickwandiger Formkörper nicht. Die EP 832936 verzichtet um eine möglichst vollständige Härtung der lichthärtbaren Silikonzusammensetzung zu erreichen, auf die Verwen-dung eines verstärkenden, d.h. trübenden Füllstoffes (wie insbesondere bestimmte Kieselsäuren) und verwendet stattdessen ein Silikonharz mit Mund Q-Einheiten, um eine ausreichende Lichtdurchlässigkeit und Härte der Mutterformen bereitzu-stellen. Mit diesen Zusammensetzungen können somit nicht beliebige dickwandige gegebenenfalls pigmentiere Formartikel oder Beschichtungen hergestellt werden.
Überraschenderweise wurde gefunden, dass es möglich ist, lichtaktivierbare, härtende Siloxanzusammensetzungen insbesondere ohne den Zusatz von Photosensibilisatoren für die Herstellung dickwandiger, insbesondere füllstoff und/oder pigmenthaltiger Formartikel und Beschichtungen geringerer Transparenz zu verwenden, insbesondere wenn man bestimmte Verfahren anwendet. Es ist überraschend somit möglich, die Vorteile der Verwendung lichthärtbarer bzw. lichtaktivierbarer Siloxanzusammensetzungen, wie geringerer Schrumpf, hohe Lichtbogen- und Kriechstrombeständigkeit sowie gute mechanische Eigenschaften auch bei der Herstellung dickwandiger insbesondere füllstoff- und/oder pigmenthaltiger Formartikel zu nutzen.
Die vorliegende Erfindung stellt somit die Verwendung einer lichtaktivierbaren, härtbaren Siloxanzusammensetzung bereit, enthaltend:
a) 3 bis 99 Gew.-% mindestens ein Polyorganosiloxan mit im Mittel mindestens zwei ungesättigten organischen Gruppen pro Molekül, wobei das Polyorganosiloxan ein alkenylgruppen-haltiges Polysiloxan ist,
b) 0,2 bis 60 Gew.-% mindestens ein Polyhydrogenorganosiloxan mit im Mittel mindestens zwei SiH-Gruppen pro Molekül,
c) 0,1 bis 60 Gew.-% mindestens einen oxidischen Füllstoff mit einer BET-Oberfläche von 50 bis 400 m²/g,
d) mindestens einen photoaktivierbaren Katalysator, enthaltend ein Metall ausgewählt aus der Gruppe, die besteht aus Pt, Ru, Rh, Pd, Ir oder Ni oder eine Verbindung des genannten Metalls, entsprechend einem Metallgehalt von 1 bis 500 ppm,
e) 0 bis 30 Gew.-% gegebenenfalls einen oder mehrere Hilfsstoffe,
   jeweils bezogen auf die Gesamtmenge der Komponenten a) bis c).
   zur Herstellung von dickwandigen Formartikeln, deren Volumen eine Kugel mit einem Durchmesser von mindestens 3 mm aufnehmen kann.

### Komponente a) (Si-Alkenyl)

In den erfindungsgemäß verwendeten lichtaktivierbaren, härtbaren Siloxanzusammensetzungen hat das alkenylgruppen-haltige Polyorganosiloxan (a) bevorzugt einen Viskositätsbereich von 0,025 und 500 Pa.s, bevorzugt 0,1 bis 100 Pa.s (25°C; Schergeschwindigkeitsgefälle D von 1 s⁻¹). Es kann aus einem einheitlichen Polymer oder Gemischen verschiedener Polyorganosiloxane, wie verschiedenen im wesentlichen linearen Polymeren (a1) mit geringem Alkenyl-Gehalt oder Gemischen aus den im wesentlichen linearen Polymeren (a1) und bevorzugt verzweigten Polymeren (a2) mit relativ hohem Alkenyl-Gehalt, wie sie weiter unten noch eingehender beschrieben sind, bestehen.
Das Polyorganosiloxan (a) besteht bevorzugt mindestens aus den Siloxaneinheiten, die ausgewählt werden aus der Gruppe, die aus den Einheiten M= R¹R₂SiO_{1/2}, D=R¹RSiO_{2/2}, T=R¹SiO_{3/2} , Q=SiO_{4/2} sowie den zweiwertigen Einheiten R² besteht, worin R, R¹ und R² wie unten definiert sind.
Erfindungsgemäß können die Polyorganosiloxane (a) prinzipiell aus zwei Gruppen (a1) und (a2) ausgewählt werden.
Die Gruppe (a1) stellt die Gruppe der Polyorganosiloxane mit einem niedrigen Alkenylgruppen-Gehalt von etwa 0,002 bis etwa 3,0 mmol/g bevorzugter zwischen 0,004 bis 1,5 mmol/g dar. Diese Polyorganosiloxane sind in der Regel im wesentlichen linear.

Die Gruppe (a2) stellt die Gruppe der Polyorganosiloxane mit hohem Alkenylgruppen-Gehalt von etwa 3,0 bis etwa 22 mmol/g dar. Diese können sowohl lineare als auch verzweigte Polyorganosiloxane einschließen.

Die Polyorganosiloxane (a) werden bevorzugt durch eine katalytische Äquilibrierung oder katalysierte Polykondensation hergestellt, wie in US 6 387 487 Spalte 3 u. 4 offenbart.

Die Polyorganosiloxane (a) kann mit der allgemeinen Formel (I) beschrieben werden:

[Mₐ₁D_{b1}T_{c1}Q_{d1}R²ₑ₁]ₘ₁ (I)

worin
M= R¹R₂SiO_{1/2},
D=R¹RSiO_{2/2},
T=R¹SiO_{3/2},
Q=SiO_{4/2},
mit
m1 = 1-1000
a1 = 1-10
b1 = 0-3000
c1 = 0-50
d1 = 0 - 1
e1 = 0 - 300,
worin
R = eine organische Gruppe, bevorzugt unsubstituierte und substituierte Kohlenwasserstoffreste, bevorzugter n-, iso-, tert.- oder C₁-C₁₂-Alkyl, C₁-C₁₂-Alkoxy(C₁-C₁₂)alkyl, C₅-C₃₀-Cycloalkyl oder C₆-C₃₀-Aryl, C₁-C₁₂-Alkyl(C₆-C₁₀)aryl, wobei diese Reste R gegebenenfalls jeweils durch eines oder mehrere F-Atome substituiert sein können und/oder eine oder mehrere -O-Gruppen enthalten können.

Beispiele für geeignete einwertige Kohlenwasserstoffreste R schließen Alkylgruppen, bevorzugt CH₃-, CH₃CH₂-, (CH₃)₂CH-, C₈H₁₇- und C₁₀H₂₁-Gruppen, cycloaliphatische Gruppen, wie Cyclohexylethyl, Arylgruppen, wie Phenyl, Tolyl, Xylyl, Aralkylgruppen, wie Benzyl und 2-Phenylethylgruppen ein. Bevorzugte einwertige Halogenkohlenwasserstoffreste R haben insbesondere die Formel CₙF₂ₙ₊₁CH₂CH₂-wobei n einen Wert von 1 bis 10 hat, wie z.B. CF₃CH₂CH₂-, C₄F₉CH₂CH₂- and C₆F₁₃CH₂CH₂-. Ein bevorzugter Rest ist die 3,3,3-Trifluorpropylgruppe.
Besonders bevorzugte Reste R schließen Methyl, Phenyl und 3,3,3-Trifluorpropyl ein.
R¹ = R oder ein unsubstituierter oder substituierter C₂-C₁₂-Alkenylrest, mit der Maßgabe, dass mindestens zwei Reste R¹ eine alkenylhaltige organische Gruppe sind, die bevorzugt ausgewählt werden aus: unsubstituierten und substituierten alkenylhaltigen Kohlenwasserstoffresten, wie n-, iso-, tert.- oder cyclisches C₂-C₁₂-Alkenyl, Vinyl, Allyl, Hexenyl, C₆-C₃₀-Cycloalkenyl, Cycloalkenylalkyl, Norbornenylethyl, Limonenyl, C₈-C₃₀-Alkenylaryl, worin gegebenenfalls ein oder mehrere - O-Atome vorliegen können (entsprechend Etherresten) und die durch ein oder mehrere F-Atome substituiert sein können.
Bevorzugte Reste R¹ sind Gruppen wie Vinyl, Allyl, 5-Hexenyl, Cyclohexenylethyl, Limonenyl, Norbornenylethyl, Ethylidennorbornyl und Styryl, besonders bevorzugt ist Vinyl.

R² = ein zweiwertiger aliphatischer n-, iso-, tert.- oder cyclischer C₁-C₁₄-Alkylenrest, oder ein C₆-C₁₄-Arylen- bzw. Alkylenarylrest ist, der jeweils zwei Siloxyeinheiten M, D oder T verbrückt, beispielsweise -D-R²-D-. Dabei wird R² bevorzugt ausgewählt aus zweiwertigen aliphatischen oder aromatischen n-, iso-, tert.- oder cyclischem C₁-C₁₄-Alkylen, C₆-C₁₄-Arylen oder -Alkylenarylgruppen.
Beispiele geeigneter zweiwertiger Kohlenwasserstoffgruppen R², die Siloxyeinheiten überbrücken können, schließen alle Alkylen- und Dialkylarylenreste, bevorzugt diejenigen wie -CH₂-, -CH₂CH₂-, CH₂(CH₃)CH-, -(CH₂)₄, -CH₂CH(CH₃)CH₂-, - (CH₂)₆- -(CH₂)₈- und -(CH₂)₁₈-Cycloalkylengruppen, wie Cyclohexylen, Arylengruppen, wie Phenylen, Xylen ein. Ihr Anteil übersteigt 30 mol.-% aller Siloxyeinheiten im allgemeinen nicht. Bevorzugt sind Gruppen wie alpha,omega-Ethylen, alpha,omega-Hexylen oder alpha,omega-Phenylen.

Darin können die Siloxyeinheiten M, D, T and Q blockweise oder statistisch in der Polymerkette verteilt und miteinander verknüpft sein. Innerhalb der Polysiloxankette kann jede Siloxaneinheit gleich oder verschieden sein.
Die Indices stellen mittlere Polymerisationsgrade dar. Bevorzugt sind die Indices wie folgt und werden zweckmäßig nach Maßgabe der gewünschten Viskosität ausgewählt. Die zuvor genannten Polyorganosiloxane (a1) weisen bevorzugt eine Struktur der allgemeinen Formel (Ia), bevorzugt der Formel (Ia') auf,

R¹R₂SiO(R¹RSiO)_{b1}SiR₂R¹ (Ia),

R¹R₂SiO(R₂SiO)_{b1}SiR₂R¹ (Ia')

worin R und R¹ wie oben definiert sind und b1 < 3000 ist.

Die Polyorganosiloxane (a1) der Formeln (Ia) und (Ia') sind wesentlichen linear und weisen einen Gehalt an ungesättigten organischen Gruppen auf, der bevorzugt zwischen 0,002 bis 3, bevorzugter zwischen 0,004 bis 1,5 mmol/g liegt. Der Gehalt an ungesättigten organischen Gruppen bezieht sich dabei auf Polymethylvinylsiloxan und ist innerhalb der vorgegebenen Viskositätsgrenzen auf Siloxygruppen mit anderen Substituenten mit anderen Molgewichten entsprechend anzupassen. Der Begriff "im wesentlichen linear" für die Polyorganosiloxane (a1), umfasst bevorzugt solche Polyorganosiloxane, die bevorzugt nicht mehr als 0,1 mol-% Siloxaneinheiten enthalten, die aus den T=RSiO_{3/2}- oder Q=SiO_{4/2}-Einheiten ausgewählt sind.

Bevorzugte Siloxy-Einheiten in den Polyorganosiloxanen (a) sind beispielsweise Alkenylsiloxyeinheiten, wie Dimethylvinylsiloxy-, Alkylsiloxyeinheiten, wie Trimethylsiloxy-, Dimethylsiloxy- und Methylsiloxy-Einheiten, Arylsiloxyeinheiten wie Phenylsiloxyeinheiten, wie Triphenylsiloxy-Dimethylphenylsiloxy-, Diphenylsiloxy-, Phenylmethylvinylsiloxy-, Phenylmethylsiloxyeinheiten.
In den genannten Polyorganosiloxanen (a1) liegt der Rest R bevorzugt als Methylrest mit mindestens 90 mol-% (bevorzugt 90 bis 99,99 mol-% bezgl. Si-Atome) vor.
Die Alkenylgruppen können entweder am Kettenende eines Silioxanmoleküles oder als Substituent an einem Siliziumatom in einer Siloxankette gebunden sein.
Im Falle alkenylarmer, im wesentlichen linearer Polyorganosiloxane (a1) liegen die Alkenylgruppen bevorzugt nur am Kettenende des Siloxanmoleküls vor. Wenn Alkenylgruppen an inneren Siliziumatomen der Siloxanketten vorliegen, ist ihr Gehalt bei den alkenylarmen Polyorganosiloxanen (a1) daher bevorzugt kleiner als 0,01 mmol/g bzw. kleiner 0,0074 mol.-% bezogen auf Siloxaneinheiten.

Um die mechanischen Eigenschaften, wie die Weiterreißfestigkeit der vernetzten Produkte zu verbessern, werden zweckmäßig Abmischungen verschiedener Polymere (d.h. es liegen mindestens zwei Polymere (a1) oder mindestens ein Polymer (a1) und (a2) vor) mit unterschiedlichem Alkenylgehalt und/oder unterschiedlicher Kettenlänge eingesetzt, wobei der gesamte Gehalt an ungesättigten Gruppen 3,0 mmol/g in der Komponente (a) bezogen auf vinylhaltige Polydimethylsiloxane zweckmäßig nicht übersteigt.
So können beispielsweise Mischungen von Polyorganosiloxanen (a1) und (a2) in Mischungsverhältnissen von
60 bis 100 Gew.-% (a1) und
0 bis 40 Gew.-% (a2)
verwendet werden.
Sowohl das Polyorganosiloxan (a1) als auch das Gemisch aus (a1) und (a2) weisen bevorzugt eine Viskosität von 0,025 bis 500 Pa.s, ganz besonders bevorzugt 0,2 bis 100 Pa.s bei 25°C auf. Die Viskosität wird gemäß DIN 53019 bei 25 °C und einem Schergeschwindigkeitsgefälle D = 1 s⁻¹ gemessen.
Bevorzugt weist das Polyorganosiloxan (a1) eine Anzahl der Siloxy-Einheiten von 20 bis 3000, besonders bevorzugt 100 bis 1500 auf (Mittlerer Polymerisationsgrad Pₙ, der sich auf Polymethylvinylsiloxan bezieht und innerhalb der vorgegebenen Viskositätsgrenzen auf Siloxygruppen mit anderen Substituenten mit anderen Molgewichten entsprechend anzupassen ist.)
Der Alkenylgehalt wird hier über ¹H-NMR bestimmt - siehe A.L. Smith (Hrsg.:): The Analytical Chemistry of Silicones, J. Wiley & Sons 1991 Vol. 112 S.356 ff. in Chemical Analysis ed. by J.D. Winefordner.

Eine weitere Klasse bevorzugter Polymere (a), die zusammen mit (a1) die Komponente (a) bilden können, sind vinylreiche, gegebenenfalls verzweigte Polyorganosiloxane (a2), die zur Steigerung z.B. der Weiterreißfestigkeit oder Zugfestigkeit in Kombination mit weiteren Polyorganosiloxanen, wie den vorstehend definierten, eingesetzt werden können.

Diese verzweigten alkenylreichen Polyorganosiloxane (a2) sind z. B. in US 3 284 406, US 3 699 073 offenbart, und enthalten einen erhöhten Anteil an ungesättigten Resten R¹, und sie können im Unterschied zu den linearen Polyorganosiloxanen einen erhöhten Anteil verzweigter bzw. verzweigender Siloxaneinheiten T=RSiO_{3/2} oder Q=SiO_{4/2} aufweisen, die in einer Ausführungsform zu mehr als 0,1 mol %, bezogen auf die vorhandenen Si-Atome, anwesend sind. Die Menge der Verzweigungseinheiten soll jedoch dadurch begrenzt sein, dass diese Komponente bevorzugt flüssig, niedrig-schmelzend (Fp. < 160°C) oder mit den übrigen Polymeren (a1) mischbare, transparente Silikonzusammensetzungen ergeben soll (> 70% Transmission bei 400 nm und 2 mm Schichtdicke).

Die vorstehend erwähnten, verzweigten Polyorganosiloxane (a2) sind Polymere, die die zuvor genannten M, D, T und Q-Einheiten enthalten. Sie weisen bevorzugt die allgemeinen Verhältnisformeln (II), (IIa) bis (II b) auf:

[Mₐ₂D_{b2}T_{c2}Q_{d2}]ₘ₂ (II)

{[R₁SiO_{3/2}][R⁴O_{1/2}]ₙ₁}ₘ₂ (IIa)

{[SiO_{4/2}}] [R⁴O_{1/2}]ₙ₁ [R₂R¹SiO_{1/2}]_{0,01-10} [RSiO_{3/2}]₀₋₅₀ [R₂SiO_{2/2}]₀₋₅₀₀}ₘ₂ (IIb)

worin R⁴ ein organischer Rest, wie C₁ bis C₂₂Alkyl, Aryl oder Arylalkyl ist.
Der Rest R⁴O_{1/2} ist bevorzugt Methoxy, Ethoxy oder Hydroxy mit den bevorzugten Indices
m2 = 1 bis 100
n1 = 0,001 bis 4
a2 = 0,01 bis 10
b2 = 0 bis 10
c2 = 0 bis 50
d2 = 1.

Das molare Verhältnis M:Q kann Werte von 0,1 bis 4:1 bzw. M:T von 0,1 bis 3:1 annehmen, das Verhältnis von D:Q bzw. D:T von 0 bis 333 : 1, wobei die Einheiten M, D und T die Reste R oder R¹ enthalten können.

Alkenylgruppenreiche verzweigte Polyorganosiloxane (a2) schließen insbesondere flüssige Polyorganosiloxane, in organischen Lösemitteln lösbare Festharze oder Flüssigharze ein, die bevorzugt aus Trialkylsiloxy (M-Einheiten) und Silikateinheiten (Q-Einheiten) bestehen, und die bevorzugt Vinyldimethylsiloxy-Einheiten in einer Menge von mindestens 3 mmol/g enthalten. Diese Harze können darüber hinaus noch bis zu maximal 10 mol% Alkoxy- oder OH-Gruppen an den Si-Atomen aufweisen.
In einer anderen bevorzugten Ausführungsform weisen die Polyorganosiloxane (a2) die allgemeine Formel (Ia) mit der Maßgabe auf, dass sie einen erhöhten Vinylgehalt wie unter (a2) definert aufweisen.
In den zuvor genannten verzweigten Polyorganosiloxanen (a2) liegt der Rest R bevorzugt als Methylrest mit mindestens 50 mol-% (d.h. 50 to 95 mol% bezgl. Si-Atome), bevorzugt mindestens 80 mol-%, vor. Das alkenylgruppenreiche, bevorzugt vinylgruppenreiche, Polyorganosiloxan (a2) weist bevorzugt einen Alkenylgruppen-gehalt von mehr als 3 mmol/g bis etwa 22 mmol/g auf, der sich auf Polymethylvinylsiloxane bezieht und innerhalb der vorgegebenen Viskositätsgrenzen auf Siloxygruppen mit anderen Substituenten am Siliziumatom mit anderem Molgewicht entsprechend anzupassen ist.

In einer bevorzugten Ausführungsform der Erfindung umfasst das Polyorganosiloxan (a) im wesentlichen vinylarme, lineare Polyorganosiloxane (a1), wie vorstehend beschrieben. Vinylreiche Polyorganosiloxane (a2), wie vorstehend beschrieben, können zugesetzt werden, um die mechanischen Eigenschaften zu verbessern, insbesondere dann, wenn die Menge des Füllstoffs beispielweise aus Gründen der Viskosität begrenzt ist.
Ein weiteres bevorzugtes Gemisch der Polyorganosiloxane (a) enthält mindestens zwei im wesentlichen lineare alkenylendgestoppte Polyorganosiloxane (a1) mit unterschiedlichen Alkenyl- bevorzugt Vinylgehalten. Durch diese Maßnahme sollen einerseits eine möglichst niedrige Viskosität der Silikonzusammensetzung vorgegeben werden, andererseits eine Vernetzungsstruktur mit den nachfolgend definierten Si-H-Verbindungen der Komponente (b) ermöglicht werden, die möglichst hohe mechanischen Festigkeiten, wie Dehnung und Weiterreißfestigkeit der vernetzten Silikonkautschuke bewirken. Wenn größere Mengen kurzkettiger alphaomega-Vinylsiloxane (zweckmäßig unterhalb einer Viskosität von 10 Pa.s) verwendet werden, erfordert dies größere Mengen alpha,omega-Si-H-Siloxane als sogenannte Kettenverlängerer, um geeignete Vernetzungsstrukturen auszubilden.

Ein alkenylgruppenhaltiges, das nicht aus einem Gemisch eines Polydiorganosiloxan des Typs (a) besteht, ist dadurch definiert, dass die Verteilung des Gewichts- und Zahlenmittels aus einer der bekannten Polymerisationsreaktionen hervorgegangen ist, bevorzugt aus der Äquilibrierung oder Polykondensation mit basischen oder sauren Katalysatoren. Derartige Verfahren mit alkalischen oder sauren Katalysatoren sind z.B. in US 5 536 803 Spalte 4 offenbart. Nach diesem Verfahren äquilibrierte Polyorganosiloxane weisen üblicherweise ein Verhältnis Mw/Mn von 1 bis 10, bevorzugt 1-2, auf, ohne Berücksichtigung der Anteile mit einem Molgewicht von kleiner 500 g/mol für den Fall R = Methyl und R¹ =Vinyl ist.

Für die Polymerisationsreaktion mit basischen oder sauren Katalysatoren können sowohl die verschiedenen Cyclosiloxane, lineare Polyorganosiloxane, wie auch symmetrisches 1,3-Divinyltetramethyldisiloxan, andere längerkettige Siloxane mit einer Trialkylsiloxy-Endstoppung oder OH-Endgruppen eingesetzt werden. Beispielhaft setzt man hierfür die Hydrolysate von unterschiedlichen Alkylchlorsilanen, wie Vinyldimethylchlorsilan und/oder Dimethyldichlorsilan und die daraus gewonnenen trialkylterminierten Siloxane für sich oder im Gemisch mit anderen Siloxanen ein.
Der mittlere Polymerisationsgrad Pₙ der Polyorganosiloxane (a), gemessen als Zahlenmittel Mₙ per GPC und mit Polystyrol als Standard, liegt bevorzugt im Bereich von Pₙ > 20 bis 3000, der bevorzugtere Bereich liegt bei Pₙ 200 bis 1500. Die hiermit definierten Polymere (a) erlauben in Kombination mit geeigneten, im Folgenden beschriebenen Polyhydrogenorganosiloxanen der Komponente (b) die Herstellung von Formartikeln bzw. Abformmassen, die ausreichend gute gummimechanische Eigenschaften, wie Bruchdehnung, Zugfestigkeit und Weiterreißfestigkeit sowie Stabilität der mechanischen Eigenschaften aufweisen.

### Komponente b) (Si-H-haltige Polysiloxane)

Die Polyorganohydrogensiloxane (b) werden bevorzugt ausgewählt aus linearen, cyclischen oder verzweigten SiH-haltigen Polyorganosiloxanen der allgemeinen Formel (II):

[Mₐ₄D_{b4}T_{c4}Q_{d4}R²ₑ₂]ₘ₃

worin
M = R³R₂SiO_{1/2},
D = R³RSiO_{2/2},
T = R³SiO_{3/2},
Q = SiO_{4/2}, worin
R = n-, iso-, tert.- oder C₁-C₁₂-Alkyl, C₁-C₁₂-Alkoxy(C₁-C₁₂)alkyl, C₅-C₃₀-Cycloalkyl oder C₆-C₃₀-Aryl, C₁-C₁₂-Alkyl(C₆-C₁₀)aryl, wobei diese Reste R gegebenenfalls jeweils durch eines oder mehrere F-Atome substituiert sein können und/oder eine oder mehrere -O-Gruppen enthalten können,
R³ = R ist oder Wasserstoff, mit der Maßgabe, dass mindestens zwei Reste R³ je Molekül Wasserstoff sind, wobei beide gleichzeitig in einem Molekül auftreten können, mindestens zwei Reste R³ pro Molekül jedoch Wasserstoff sind, R ist oben definiert, bevorzugt ist R=Methyl.

R² = ein zweiwertiger aliphatischer n-, iso-, tert.- oder cyclischer C₁-C₁₄-Alkylenrest, oder ein C₆-C₁₄-Arylen- bzw. Alkylenarylrest ist, der jeweils zwei Siloxyeinheiten M, D oder T verbrückt,
m3 = 1 bis 1000
a4 = 1 bis 10
b4 = 0 bis 1000
c4 = 0 bis 50
d4 = 0 bis 1
e2 = 0 bis 300.

Die Polyorganohydrogensiloxane (b) sind vorzugsweise lineare, cyclische oder verzweigte Polyorganosiloxane, deren Siloxyeinheiten zweckmäßig ausgewählt werden aus M=R₃SiO_{1/2}, M^{H}=R₂HSiO_{1/2}, D=R₂SiO_{2/2}, D^{H}=RHSiO_{2/2}, T=RSiO_{3/2}, T^{H}=HSiO_{3/2}, Q=SiO_{4/2}, in denen diese Einheiten vorzugsweise aus MeHSiO- bzw.

Me₂HSiO_{0,5}-Einheiten neben gegebenenfalls anderen Organosiloxyeinheiten, vorzugsweise Dimethylsiloxyeinheiten, ausgewählt werden.
Die Siloxyeinheiten können blockweise oder statistisch in der Polymerkette miteinander verknüpft vorliegen. Jede Siloxaneinheit der Polysiloxankette kann identische oder unterschiedliche Reste tragen.
Die Indices der Formel (III) beschreiben den mittleren Polymerisationsgrad Pn gemessen als Zahlenmittel Mn, bestimmt per GPC (Polystyrol als Standard), die sich auf Polyhydrogenmethylsiloxan beziehen und innerhalb der vorgegebenen Viskositätsgrenzen auf Siloxygruppen mit anderen Substituenten und anderem Molekulargewicht anzupassen sind.
Das Polyorganohydrogensiloxan (b) umfaßt insbesondere alle flüssigen, fließfähigen und festen Polymerstrukturen der Formel (III) mit den aus den oben angegebenen Indices resultierenden Polymerisationsgraden. Bevorzugt sind die bei 25 °C flüssigen Polyorganohydrogensiloxane (b) mit niedrigem Molgewicht, d.h. kleiner als etwa 60000 g/mol, bevorzugt kleiner als 20000 g/mol.
Die bevorzugten Polyorganohydrogensiloxane (b) sind Strukturen, die aus der Gruppe ausgewählt werden, die durch die Formeln (Illa-Ille) beschrieben werden können

HR₂SiO(R₂SiO)_{z}(RHSiO)ₚSiR₂H (IIIa)

HMe₂SiO(Me₂SiO)_{z}(MeHSiO)ₚSiMe₂H (IIIb)

Me₃SiO(Me₂SiO)_{z}(MeHSiO)ₚSiMe₃ (IIIc)

Me₃SiO(MeHSiO)ₚSiMe₃ (IIId)

{[R₂R³SiO_{1/2} ]₀₋₃ [R³SiO_{3/2} ] [R⁴O)ₙ₂}ₘ₃ (IIIe)

{[SiO_{4/2}}][R⁴O_{1/2}]ₙ₂[R₂R³SiO_{1/2} ]_{0,01-10}[R³SiO_{3/2} ]₀₋₅₀[RR³SiO_{2/2}]₀₋₁₀₀₀}ₘ₃ (IIIf)

mit
z = 0 bis 1000
p = 0 bis 100
z+p = b4 = 1 bis 1000
n2 = 0,001 bis 4
worin R⁴O_{1/2} ein Alkoxyrest am Silicium ist,
R³ wie oben definiert ist.

Eine bevorzugte Ausführungsform der Verbindungsklasse (IIIe) und (IIIf) sind z.B. monomere bis polymere Verbindungen, die sich durch die Formel [(Me₂HSiO)₄Si]ₘ₃ beschreiben lassen. Die SiH-Konzentration liegt bevorzugt im Bereich von 0,1 bis 17 mmol/g, die sich auf Polyhydrogenmethylsiloxane bezieht und innerhalb der vorgegebenen Viskositätsgrenzen auf Siloxygruppen mit anderen Substituenten anzupassen ist.

In einer besonders bevorzugten Auswahl der Formel (Illb) mit R= Methyl und z > 0 weisen die polymeren Vernetzer eine SiH-Konzentration einen bevorzugten Wert von 0,05 bis 12 mmol SiH/g auf. Falls z = 0 ist, wie in Formel (IIIc) mit R= Methyl ist, liegt die SiH-Konzentration bevorzugt bei 7-17 mmol SiH/g.

In einer bevorzugten Ausführungsform der Erfindung besteht das Polyorganohydrogensiloxan (b) aus mindestens einem Polyorganohydrogensiloxan (b1) mit zwei Si-H-Grupppen pro Molekül und mindestens einem Polyorganohydrogensiloxan des Typs (b2) mit mehr als zwei Si-H-Grupppen pro Molekül. Bei dieser Ausführungsform besteht die Komponente (b) aus mindestens zwei unterschiedlichen Organohydrogenpolysiloxanen, die unterschiedliche Vernetzungsstrukturen erzeugen, um in Verbindung mit niedrigviskosen Polysiloxanen der Komponente (a) Silikonelastomere hoher Festigkeit zu ergeben. Diesen unterschiedlichen Organohydrogenpolysiloxanen kann man im wesentlichen zwei Funktionen zuordnen. Bifunktionelle Polyorganohydrogensiloxane (b1) wirken als sogenannte Kettenverlängerer, die Polyorganohydrogensiloxane (b2) höherer Funktionalität ( > 2) wirken als Vernetzer. Die erfindungsgemäß verwendete Silikonzusammensetzung enthält bevorzugt mindestens einen bifunktionellen Kettenverlängerer (b1) und mindestens einen Vernetzer (b2).

Beispiele für bevorzugte Strukturen der Komponente (b1) in der erfindungsgemäßen Silikonkautschuk-Zusammensetzung schließen die Kettenverlängerer (b1) wie:
HMe₂SiO-(Me₂SiO)_{z}SiMe₂H und
Me₃SiO-(Me₂SiO)_{z}(MeHSiO)₂SiMe₃,
[(Me₂SiO)_{z}(MeHSiO)₂]

Die Vernetzer (b2) enthalten Verbindungen wie:
Me₃SiO-(MeHSiO)ₚSiMe₃,
HMe₂SiO(Me₂SiO)_{z}(MePhSiO)_{z}(MeHSiO)ₚSiMe₂H,
(MeHSiO)p,
(HMe₂SiO)₄Si
MeSi(OSiMe₂H)₃
ein, worin p, z, wie oben definiert sind.

Derartige Mischungen aus sogenannten Kettenverlängerern und Vernetzern können beispielsweise, wie in US 3 697 473 beschrieben, verwendet werden.
In einer weiteren bevorzugten Ausführungsform beträgt die Menge der Komponenten (b1) und (b2)
0 bis 70 mol-% (b1)
30 bis 100 mol-% (b2), bezogen auf (b1) und (b2).

Falls eine Erhöhung der Vernetzungsgeschwindigkeit notwendig ist, kann dies z.B. durch Erhöhung des Verhältnisses SiH zu Alkenyl, einer erhöhten Menge Katalysator (d) oder durch eine Erhöhung des Anteils von Polyorganosiloxanen (b2), die HMe₂SiO_{0,5}-Einheiten enthalten, erreicht werden.

Die Polyorganosiloxane (b) sind vorzugsweise bei Raumtemperatur flüssig bzw. siloxanlöslich, d.h. sie weisen bevorzugt weniger als 1000 Siloxyeinheiten auf, d.h. sie haben vorzugsweise Viskositäten unter 40 Pa.s bei 25°C und D= 1 s⁻¹.

Die Kettenlänge der Vernetzer als Komponente (b2), die überwiegend aus MeHSiO-Einheiten bestehen, liegt vorzugsweise bei 3 bis 200, besonders bevorzugt liegt sie bei 15 bis 60 MeHSiO-Einheiten.

Die Kettenlänge der Kettenverlängerer als Komponente (b1), die überwiegend aus Me₂SiO-Einheiten und HMe₂SiO_{1/2} bestehen, liegt vorzugsweise bei 2 bis 100, besonders bevorzugt liegt sie bei 2 bis 60 Me₂SiO-Einheiten.

Den SiH-Gehalt bestimmt man in der vorliegenden Erfindung über ¹H-NMR siehe A.L. Smith (Ed.): The Analytical Chemistry of Silicones, J. Wiley & Sons 1991 Vol.112 S. 356 ff. in Chemical Analysis ed. by J.D. Winefordner.

Die Polyorganohydrogensiloxane (b) können nach an sich bekannten Verfahren, z.B. mit einer sauren Äquilibrierung oder Kondensation, hergestellt werden, wie beispielsweise in US 5 536 803 offenbart. Die Polyorganohydrogensiloxane (b) können auch Umsetzungsprodukte sein, die aus einer Hydrosilylierung von Organohydrogensiloxanen mit alkenylgruppenhaltigen Siloxanen in Gegenwart der Katalysatoren (c) hervorgegangen sind, wobei der resultierende SiH-Gehalt bevorzugt innerhalb der zuvor definierten Grenzen liegt. Dabei resultieren R²- bzw. Alkylengruppen-verbrückte Organohydrogensiloxane (b).
Die Polyorganohydrogensiloxane (b) können weiterhin auch Umsetzungsprodukte sein, die aus der Kondensation von z.B. Organohydrogenalkoxysiloxanen (b) mit Hydroxy- oder Alkoxysilanen bzw. Siloxanen hervorgegangen sind, wie z.B. in der US 4 082 726 z.B. Spalte 5 und 6 beschrieben.

Erfindungsgemäß wird das Verhältnis der Komponente (b) zur Komponente (a) bevorzugt so gewählt, dass ein molares Verhältnis von Si-H zu Si-Alkenyl-Einheiten von etwa 0,5 bis 20 : 1, bevorzugt von 1 bis 3 : 1 vorliegt.

Die bevorzugte Menge der Polyorganohydrogensiloxane (b) liegt bei 0,1 bis 200 Gewichtsteile bezogen auf 100 Gewichtsteile der Komponente (a).

Über das Verhältnis von SiH- zu Si-Alkenyl-Einheiten lassen sich viele Eigenschaften, wie die gummimechanischen Eigenschaften, die Vernetzungsgeschwindigkeit, die Stabilität und die Oberflächenklebrigkeit beeinflussen.

### Komponente c) (Füllstoff)

Die erfindungsgemäß verwendeten Silikonkautschukmischungen enthalten weiterhin 0,1 bis 60 Gew.-% mindestens einen oxidischen Füllstoff mit einer BET-Oberfläche von 50 bis 400 m²/g.

Diese schließen beispielsweise alle feinteiligen Füllstoffe ein, d.h. die Partikel kleiner 100 µm aufweisen, d.h. bevorzugt aus solchen Partikeln bestehen. Vorzugsweise handelt es sich bei den Füllstoffen um sogenannte verstärkende Kieselsäuren, die die Herstellung opaker, besser transparenter Elastomere erlauben, d.h. solche, die die gummimechanischen Eigenschaften nach Vernetzung verbessern, die Festigkeit erhöhen, wie z.B. pyrogene oder gefällte Kieselsäure mit BET-Oberflächen zwischen 50 und 400 m²/g, die hier bevorzugt in spezieller Weise oberflächlich hydrophobiert sind. Die Komponente (c) wird bevorzugt in Mengen von 1 bis 100 Gewichtsteilen, vorzugsweise 10 bis 70 Gew.teilen, noch bevorzugter 10 bis 50 Gew.-teile, bezogen auf 100 Gewichtsteile der Komponente (a) eingesetzt.
Füllstoffe mit BET-Oberflächen oberhalb 50 m²/g erlauben die Herstellung von Silikonelastomeren mit verbesserten gummimechanischen Eigenschaften. Die gummimechanische Festigkeit und die Transparenz erhöhen sich bei z.B. pyrogenen Kieselsäuren allerdings erst oberhalb 90 m²/g, deshalb sind diese bevorzugt, noch bevorzugter sind Kieselsäuren wie z.B Aerosil 200, 300, HDK N20 oder T30, Cab-O-Sil MS 7 oder HS 5. mehr als 200 m²/g BET-Oberfläche. Mit steigender BET-Oberfläche steigt auch die Transparenz der sie enthaltenden Silikonmischungen. Handelsnamen für sogenannte Fällungskieselsäuren, engl. 'Wet Silicas', sind beispielsweise Vulkasil VN3 oder FK 160 von Degussa oder Nipsil LP von Nippon Silica K.K und andere.

Als nicht transparente, sogenannte nicht verstärkende Füllstoffe, dienen z.B. Quarzmehle, Diatomeenerden, Cristobalitmehle, Glimmer, Aluminumoxide,- hydroxide, Ti-, Fe-, Zn-oxide, Kreiden oder Ruße mit BET-Oberflächen von 0,2 bis 50 m²/g. Diese Füllstoffe sind unter einer Vielzahl von Handelsnamen erhältlich wie Sicron, Min-U-Sil, Dicalite Crystallite. Die sogenannten Inertfüllstoffe oder Extender mit BET-Oberflächen unter 50 m²/g sollten zweckmäßig für die Anwendung in den erfindungsgemäßen Silikonkautschuken keine Partikel (< 0,005 Gew.%) oberhalb 100 µm enthalten, damit bei der weiteren Verarbeitung keine Probleme bei der nachgeschalteten Verarbeitung, wie dem Passieren von Sieben oder Düsen, auftreten oder die mechanischen Eigenschaften der daraus erzeugten Formteile nachteilig beeinflußt werden.

Zu den trübenden Füllstoffen zählen insbesondere auch nicht-transparente insbesondere anorganische Pigmente.

Die Verwendung dieser trübenden Füllstoffe ist nur dann bevorzugt, wenn die Transparenz nicht von Bedeutung ist und andere funktionelle Eigenschaften mit ihrer Hilfe herbeigeführt werden müssen, wie z.B. Pigmentierung oder elektrische Eigenschaften.

Wie der Fachmann weiß, kann ein Füllstoff auch ein Pigment sein. Klarstellend sollen für die vorliegende Erfindung alle anorganischen Pigmente unter den Begriff Füllstoff als Komponente (c) fallen, während alle übrigen Pigmente bzw. Farbstoffe, insbesondere organische Farbstoffe und Stabilisatoren unter die Definition der Hilfsstoffe (e) fallen sollen.

Mit dem Begriff Füllstoff (c) sind Füllstoffe inklusive ihrer gegebenenfalls an die Oberfläche gebundenen Hydrophobierungsmittel bzw. Dispergierungsmittel bzw.

Process-Aids, gemeint, die die Wechselwirkung des Füllstoffes mit dem Polymer, z.B. die verdickende Wirkung beeinflussen, vorzugsweise herabsetzen. Bei der Oberflächenbehandlung der Füllstoffe handelt es sich vorzugsweise um eine Hydrophobierung mit Silanen oder Siloxanen. Sie kann z.B. 'in situ' durch die Zugabe von Silazanen, wie Hexamethyldisilazan und /oder 1,3-Divinyltetramethyldisilazan, unter Zusatz von Wasser erfolgen, die 'In-situ' Hydrophobierung ist bevorzugt. Sie kann auch mit anderen gängigen Füllstoffbehandlungsmitteln erfolgen, wie Vinylalkoxysilanen, z.B. Vinyltrimethoxysilan, anderen Silanen mit ungesättigten organofunktionellen Gruppen, wie Methacryloxypropyltrialkoxysilanen, aber auch Polyorganosiloxandiolen mit Kettenlängen von 2 bis 50, die ungesättigte organische Reste tragen, um reaktive Stellen für die Vernetzungsreaktion bereitzustellen.
Beispiele für kommerziell erhältliche, vorab mit verschiedenen Silanen hydrophobierte Kieselsäuren sind: Aerosil R 972, R 974, R 976 oder R 812 oder z.B. HDK 2000 oder H30 Beispielhafte Handelsnamen für sogenannte hydrophobierte Fällungskieselsäuren, engl. 'Wet Silicas', sind Sipernat D10 oder D15 von Degussa.
Diese vorab hydrophobierten Kieselsäuren sind weniger bevorzugt als die 'in-situ' - mit Silazanen hydrophobierten Kieselsäuren. Mit der Auswahl der Menge des Füllstofftyps, seiner Menge und der Art der Hydrophobierung können die gummimechanischen Eigenschaften und die rheologischen, d.h. verarbeitungstechnischen Eigenschaften der Silikonkautschukmischungen beeinflußt werden.

In einer bevorzugten Ausführungsform enthält die erfindungsgemäß verwendete Silikonzusammensetzung mindestens einen verstärkenden Füllstoff (c), der mindestens eine BET-Oberfläche von mehr als 50 m²/g, bevorzugt mehr als 80 m²/g BET-Oberfläche aufweist.
In dieser besonders bevorzugten Ausführungsform ist der verwendete Füllstoff (c) ein oxidischer Füllstoff, erhältlich durch ein Verfahren, dass die Schritte umfasst:
a. Vermischen mindestens eines reaktiven Silans i) mit mindestens einem oxidischen Füllstoff gegebenenfalls in Gegenwart von Wasser,
b. Abtrennen von in der Mischung enthaltenen niedrigsiedenden Bestandteilen,
c. Zugabe mindestens eines reaktiven Silans ii), ohne Zugabe von Wasser und gegebenenfalls Erwärmen der Mischung.

### Schritt a)

Schritt a) beinhaltet das Vermischen mindestens eines reaktiven Silans i) mit mindestens einem oxidischen Füllstoff gegebenenfalls in Gegenwart von Wasser. Schritt a) wird zweckmäßig in einem Temperaturbereich von etwa Raumtemperatur (25°C) bis etwa 200°C und etwa Normaldruck (1013 mbar) bis etwa 30 bar. Bevorzugt erfolgt das Mischen bei Raumtemperatur und Normaldruck. Das Mischen wird in einer üblichen Mischapparatur, wie Kneter, Dissolver, Mischturbinen, Schneckenmischer, Rührkessel, bevorzugt in einem Kneter oder Dissolver durchgeführt. Die Mischdauer reicht beispielsweise von etwa 10 Minuten bis etwa 400 Minuten. Schritt a) wird in Gegenwart von Wasser durchgeführt, wo bei das reaktive Silan i) aus Organosilazanen, Hexaorganodisilazanen, Trialkylsilylaminen, Trialkylsilyloximen, Trialkylsilylamiden oder Organoalkoxysilanen ausgewählt ist. Wasser dient in diesem Fall als Reaktionspartner zur Bildung von hydroxyfunktionellen Zwischenprodukten der genannten reaktiven Silane. Wenn Organosilanole als reaktive Silane i) verwendet werden, kann der Zusatz von Wasser entfallen, was jedoch den Zusatz von Wasser nicht ausschließt.

Wasser kann darüber hinaus auch als flüssige kontinuierliche Phase in Schritt a) dienen, in der das reaktive Silan i), der oxidische Füllstoff, die oben genannten Zwischenprodukte und Spaltprodukte aus der Umsetzung von Wasser und reaktiven Silanen i) dispergiert bzw. gelöst sind. Die flüssige kontinuierliche Phase kann darüber hinaus durch andere Lösungsmittel, wie anorganische oder organische Lösemittel, niedrig oder hochviskose Polymere gebildet werden. D.h., dass die Polymere, deren Verstärkung der Füllstoff dienen soll, bereits während der Modifizierung des Füllstoffs anwesend sein können, oder anders gesagt, dass die Modifizierung des Füllstoffs in Gegenwart der zu verstärkenden Polymere oder der härtenden Zusammensetzung, wie zum Beispiel in Gegenwart der unten beschriebenen Komponente a) einer härtbaren Polyorganosiloxan-Zusammensetzung erfolgen kann.

Die Wassermenge, die im Schritt a) verwendet wird, muss mindestens so bemessen sein, dass die genannten reaktiven Silane i) hydrolysiert werden können. Zweckmäßig gibt man soviel Wasser zur Mischung in Schritt a), dass die Reaktionsprodukte der Umsetzung des reaktiven Silans i) mit dem Wasser noch in der wässrigen Phase verbleiben bzw, ausreichend verdünnt werden können. Bevorzugt beträgt die Wassermenge mindestens etwa 5 Gewichtsteile Wasser auf 100 Gewichtsteile des Silans i), bevorzugt beträgt die Menge des verwendeten Wassers etwa 10 bis 50 Gewichtsteile auf 100 Gewichtsteile des reaktiven Silans i).

Wird Wasser als flüssige kontinuierliche Phase verwendet, wird diese Menge in jedem Fall erreicht. In diesem Fall beträgt die verwendete Wassermenge bevorzugt mindestens etwa 300 Gewichtsteile auf 100 Gewichtsteile des oxidischen Füllstoffs.

Wird eine andere flüssige kontinuierliche Phase als Wasser in Schritt a) verwendet, so beträgt deren Menge bevorzugt mindestens etwa 150 Gewichtsteile auf 100 Gewichtsteile des oxidischen Füllstoffs.

Schritt a) des Vermischens des reaktiven Silans i) mit dem oxidischen Füllstoff kann wahlweise auch in Gegenwart eines Katalysators durchgeführt werden. Die Anwesenheit eines Katalysators erfolgt bevorzugt, wenn Organoalkoxysilane oder Organosilanole als reaktive Silane i) verwendet werden. Die Katalysatoren schließen beispielsweise ein: Schwache Basen und Säuren mit pKₐ von 4 bis 9. Beispiele schließen ein: Ammoniak, Alkylamine, Carbonsäuren, Hydrogencarbonate, Hydrogenphophate, -sulfate, saure Salze von Carbonsäuren, Kohlensäurehalbester etc. Der Katalysator wird zweckmäßig in Mengen von 0,5 bis 20 Gew.-% bezogen auf die Menge des reaktiven Silans i) angewendet.

Die in Schritt a) verwendeten Mengen des reaktiven Silans i) und des oxidischen Füllstoffs hängen unter anderem von dessen Typ, wie zum Beispiel von der spezifischen Oberfläche des Füllstoffs ab. Um eine ausreichende Modifizierung des Füllstoffes in Schritt a) zu erzielen, werden zweckmäßig mindestens etwa 3 Gewichtsteile des reaktiven Silans i) auf 100 Gewichtsteile des oxidischen Füllstoffs verwendet. Eine Menge von weniger als 3 Gewichtsteile des reaktiven Silans i) auf 100 Gewichtsteile des oxidischen Füllstoffs ist im allgemeinen weniger bevorzugt, da mit einer zu geringen Oberflächenmodifizierung gerechnet werden muss. Das reaktive Silan i) wird bevorzugt in einer Menge von höchstens etwa 30 Gewichtsteilen des reaktiven Silans i) auf 100 Gewichtsteile des oxidischen Füllstoffs verwendet. Ein bevorzugter Mengenbereich des verwendeten reaktiven Silans i) liegt bei etwa 8 bis 15 Gewichtsteilen des reaktiven Silans i) auf 100 Gewichtsteile des oxidischen Füllstoffs.

Das in Schritt a) verwendete reaktive Silan i) ist ein Silan, dass in der Lage ist, gegebenenfalls durch Reaktion mit Wasser geeignete zur Reaktion mit der Oberfläche eines oxidischen Füllstoffs befähigte reaktive Zwischenprodukte zu bilden. Bevorzugt werden solche reaktiven Silane i) aus der Gruppe ausgewählt, die aus Organosilazanen, Hexaorganodisilazanen, Organosilanolen, Trialkylsilylaminen, Trialkylsilyloximen, Trialkylsilylamiden oder Organoalkoxysilanen besteht. Bevorzugter werden die reaktiven Silane i) aus Hexaorganodisilazanen und Organosilanolen ausgewählt. Besonders bevorzugt sind Hexamethyldisilazan, 1,3-Divinyltetramethyldisilazan, Trimethylsilanol und Vinyldimethysilanol.

Der in Schritt a) verwendete oxidische Füllstoff kann irgend ein Metalloxid sein. Es wird zweckmäßig ausgewählt aus Kieselsäuren, Aluminiumoxiden, Aluminiumhydroxiden, Titanoxiden, die nach verschiedenen Verfahren hergestellt werden, wie durch Flammenhydrolyse, Fällungsverfahren, etc.
Die spezifische Oberfläche nach BET dieser oxidischen Füllstoffe liegt bevorzugt bei mindestens etwa 50 m²/g, noch bevorzugter bei mindestens etwa 90 m²/g. Beispiele schließen ein: pyrogene Kieselsäuren, wie Aerosil (Degussa), HDK (Wacker), Cab-O-Sil (Cabot). Ein bevorzugter Füllstoff, der erfindungsgemäß behandelt wird, ist Kieselsäure, bevorzugter mit einer spezifischen Oberfläche nach BET von mindestens etwa 200 m²/g.

Erfindungsgemäß ist es auch möglich, eine Mischung einer oder mehrerer, insbesondere zweier Füllstoffe mit verschiedenen spezifischen Oberflächen zu verwenden. Durch geeignete Auswahl verschiedener insbesondere zweier Füllstoffe mit verschiedenen spezifischen Oberflächen ist es möglich, die Wirkung der Erfindung, nämlich die Fließfähigkeit von nicht ausgehärteten Polymerzusammensetzungen sehr hoch zu halten und gleichzeitig in der ausgehärteten Polymerzusammensetzung keine Verschlechterung der (gummi)mechanischen Eigenschaften zu erhalten, d.h. noch zu verstärkend zu wirken.

### Schritt b)

Schritt b) beinhaltet das Abtrennen von niedrigsiedenden Bestandteilen aus der in Schritt a) erhaltenen Mischung durch Einstellen von solchen Druck- und Temperaturbedingungen, dass die in der Mischung enthaltenen niedrigsiedenden Bestandteile verdampfen. Derartige niedrigsiedende Bestandteile sind insbesondere Bestandteile mit einem Siedepunkt von weniger als 180° C bei Normaldruck (1013 mbar), wie Wasser, Ammoniak, Alkohole, Amine, Hydroxylamine, Amide und Silanole, die sich in Schritt a) gebildet haben. Geeignete Druck- und Temperaturbedingungen sind beispielsweise Temperaturen von 30 bis 250 °C und Drücke von etwa 0,01 bis 1013 mbar. Temperaturen von mehr als 250°C sind in Schritt b) weniger bevorzugt, da es zu einer Zersetzung der flüssigen kontinuierlichen Phase kommen kann, insbesondere wenn es sich dabei um flüssige Polymere handelt. Bevorzugt erfolgt das Verdampfen der niedrigsiedenden Bestandteile bei einer Temperatur von 120 bis 180° C und Normaldruck (1013 mbar). Schritt b) findet zweckmäßig in der in Schritt a) erwähnten Mischapparatur unter Rühren bzw. Kneten statt. Schritt b) wird zweckmäßig so lange durchgeführt, bis der Anteil der niedrigsiedenden Bestandteile der Mischung auf weniger als 10 Gew.-%, bevorzugter weniger als 5 Gew.-%, noch bevorzugter weniger als 0,5 Gew.-% abgesenkt ist. Der Anteil an niedrigsiedenden Bestandteilen in der in Schritt b) erhaltenen Mischung wird zweckmäßig bestimmt durch Halten der Mischung bei einer Temperatur von 150°C / 20 mbar für 45 Minuten.

### Schritt c)

Schritt c) des erfindungsgemäßen Verfahrens beinhaltet die Zugabe mindestens eines reaktiven Silans ii), ohne Zugabe von Wasser und gegebenenfalls das Erwärmen der erhaltenen Mischung. Die Zugabe des reaktiven Silans ii) nach der Abtrennung der niedrigsiedenden Bestandteile in Schritt b) erfolgt zweckmäßig nach Einstellung solcher Druck- und Temperaturbedingungen, unter denen die Kontaktzeit zwischen dem reaktiven Silan ii) und dem vorbehandelten oxidischen Füllstoff eine ausreichende Umsetzung der beiden Komponenten erlaubt.

Das Zumischen des reaktiven Silans (ii) kann beispielsweise bei einer Temperatur von Raumtemperatur bis 150 °C bevorzugt unter Normaldruck erfolgen. Bevorzugt erfolgt die Zugabe bei Raumtemperatur.

Nach erfolgter Zugabe des reaktiven Silans kann die Temperatur gegebenenfalls erhöht werden, so lange eine das Silan für eine gewisse Zeit in der Mischung verbleibt bzw. im Kontakt mit dem vorbehandelten oxidischen Füllstoff verbleibt.

Die Kontaktzeit nach erfolgter Zugabe sollte zweckmäßig mindestens etwa 30 Minuten betragen. Die Kontaktzeit hängt ab von der Kontakttemperatur, der Reaktivität der Silane ii) sowie deren Konzentration in der Mischung. Die Kontaktzeit kann bis zu 30 Tagen betragen, insbesondere wenn der Kontakt bei Raumtemperatur erfolgt. Prinzipiell ist es möglich, den Füllstoff nach der Behandlung mit dem Silan ii) ohne weitere Abtrennoperation zu belassen und zu verwenden. Allerdings empfiehlt es sich, in einem weiteren Schritt, der im Prinzip Schritt b) entspricht auch nach Schritt c) in der Mischung verbliebene niedrigsiedende Komponenten wie überschüssiges Silan ii) sowie Reaktionsprodukt davon aus der Mischung abzutrennen. Die Bedingungen dieses weiteren Abtrennschrittes können dabei im wesentlichen den Bedingungen des Schrittes b) entsprechen. Die Schritte b) und c) können gegebenenfalls einmal oder mehrmals wiederholt werden.

Die reaktiven Silane ii) des Schrittes c) können gleich oder verschieden von den reaktiven Silanen sein, die in Schritt a) verwendet werden. Bevorzugt werden in Schritt c) die gleichen reaktiven Silane verwendet, wie in Schritt a). Die reaktiven Silane ii) des Schrittes c) werden bevorzugt ausgewählt aus der Gruppe, die besteht aus Organosilazanen, Hexaorganodisilazanen, Trialkylsilylaminen, Trialkylsilyloximen oder Trialkylsilylamiden. Bevorzugter werden die reaktiven Silane ii) aus Hexaorganodisilazanen ausgewählt.
Die in Schritt c) verwendete Menge des reaktiven Silans ii) ist allgemeinen geringer als die in Schritt a) verwendete Menge des reaktiven Silans i). Die Menge des in Schritt c) verwendeten reaktiven Silans ii) hängt zum Beispiel von der Menge des in Schritt a) verwendeten reaktiven Silans i). Grundsätzlich gilt, das je kleiner die Menge des in Schritt a) verwendeten reaktiven Silans i) ist, desto größer die Menge des in Schritt c) verwendeten reaktiven Silans ii) ist. Um eine ausreichende Modifizierung des Füllstoffes in Schritt c) zu erzielen, werden zweckmäßig weniger als etwa 15 Gewichtsteile des reaktiven Silans ii) auf 100 Gewichtsteile des oxidischen Füllstoffs, bevorzugter weniger als etwa 3 Gewichtsteile des reaktiven Silans ii) verwendet. Eine Menge weniger als 0,1 Gewichtsteile des reaktiven Silans ii) auf 100 Gewichtsteile des oxidischen Füllstoffs ist im allgemeinen weniger bevorzugt, da die Menge nicht ausreichend zuverlässig mit der Oberfläche des oxidischen Füllstoffs in Wechselwirkung treten kann.

Der Schritt c) wird ohne Zugabe von Wasser durchgeführt. Es wurde nämlich festgestellt, dass die Zugabe von Wasser, wie sie in Schritt a) erfolgt, im Schritt c) überraschend dazu führt, dass die Verringerung der Strukturviskosität in der Zusammensetzung mit den Polymeren nicht im ausreichenden Maß erfolgt.

Die nach dem erfindungsgemäßen Verfahren erhaltenen oberflächenmodifizierten oxidischen Füllstoffe (c) werden den vorstehend erwähnten Zusammensetzungen bevorzugt in Mengen von etwa 0,001 bis etwa 50 Gewichtsteile pro 100 Gewichtsteile der Polymere a) + b) oder der vernetzbaren Zusammensetzungen zugesetzt. Bevorzugter sind etwa 15 bis etwa 45 Gewichtsteile des modifizierten oxidischen Füllstoffs je 100 Gewichtsteile der Polymere a) + b).

Durch das erfindungsgemäße Verfahren werden oxidische Füllstoffe erzeugt, die weniger verdicken als die nach den bisherigen Verfahren des Standes der Technik hydrohobierten Füllstoffe bei gleicher Ausgangsoberfläche bewirken.

Durch die Verwendung dieses speziellen Füllstoffs werden besonders fließfähige Silikonkautschukzusammensetzungen erhalten, ohne dass die mechanischen Eigenschaften der gehärteten dickwandigen Silikonelastomere beeinträchtigt werden. Dies gilt insbesondere auch, wenn die Anwesenheit von Polyethern als Tensid zur Hydrophilisierung der Oberfläche der Silikonelastomere die nicht ausgehärteten Silikonkautschukzusammensetzungen unerwünscht verdickt. Die nach dem oben beschriebenen Verfahren erhaltenen modifizierten oxidischen Füllstoffe führen selbst in Anwesenheit von Polyethern bei der Einarbeitung in die erfindungsgemäß verwendeten Silikonkautschuk-Zusammensetzungen nur zu einer geringen, die Verarbeitbarkeit der Polymermassen einschränkenden Verdickungswirkung. Dies stellt insbesondere dann einen Vorteil dar, wenn die erfindungsgemäß verwendete Silikonkautschukzusammensetzung nach der Lichtaktivierung ohne Druck in eine Form überführen möchte oder diese, auf ein Substrat aufgetragen, unter der eigenen Schwerkraft fließen sollen.

### Komponente (d) (Katalysator)

Die Komponente (d), der Hydrosilylierungskatalysator, enthält bevorzugt mindestens ein Metall, das ausgewählt wird aus der Gruppe, die besteht aus Pt, Pd, Rh, Ni, Ir oder Ru. Der Hydrosilylierungskatalysator kann in metallischer Form, in Form einer Komplex-Verbindung und/oder als Salz verwendet werden. Die Katalysatoren können mit oder ohne Trägermaterialien in kolloidalem oder pulverförmigem Zustand verwendet werden.
Der Edelmetallkatalysator ist bevorzugt ein photoaktivierbarer Platinkatalysator, der eine ausreichende Topfzeit, also Verarbeitungszeit bis zur Gelbildung der obengenannten Komponenten bereitstellt, nachdem diese zusammengegeben wurden. Einerseits soll er eine schnelle Vernetzung ermöglichen, andererseits diese noch nicht bewirken, solange die vorbereitenden Schritte zur Durchführung einer vollständigen Vulkanisation eines Formkörpers, wie die der Formgebung, das Mischen, die Formfüllung noch nicht abgeschlossen sind. Beispiele für photoaktivierbare Katalysatoren schließen η-Diolefin-σ-aryl-Platinkomplexe wie in US 4 530 879, EP 122 008, EP 146307 oder US 2003-0199603 offenbart, sowie Platinverbindungen mit ein, deren Reaktivität beispielsweise mit Azodicarbonsäureestern, wie in US 4 640 939 offenbart, gesteuert werden kann.
Die darüber hinaus verwendbaren photoaktivierbaren Platinverbindungen sind diejenigen, ausgewählt aus der Gruppe, deren Reaktivität mit photoaktivierbaren Liganden, wie Diketone beispielsweise Benzoylacetonen oder Acetylendicarbonsäureester und Platinkatalysatoren, die in photoabbaubare organische Harze eingebettet sind. Andere Pt-Katalysatoren werden beispielhaft genannt in US 3 715 334 oder US 3 419 593 und Lewis, Colborn, Grade, Bryant, Sumpter und Scott in Organometallics, 1995, 14, 2202-2213.
Die Bildung von photoaktivierbaren Katalysatoren kann auch 'in-situ' in der eingesetzten Silikonkautschuk-Zusammenstzung erfolgen, in dem man Pt⁰-Olefinkomplexe einsetzt und entsprechende photoaktiverbare Liganden dazugibt.
Pt⁰- Olefinkomplexe stellt man beispielsweise in Gegenwart von 1,3-Di-vinyltetramethyldisiloxan (M^{Vi}₂) durch Reduktion von Hexachloroplatinsäure oder von anderen Platinchloriden her.

Die hier verwendbaren photoaktivierbaren Platinkatalysatoren sind nicht auf diese zuvor genannten Beispiele beschränkt.

Die Menge der Komponente (d) liegt bei 1-500 ppm, besonders bevorzugt 2-100 ppm, gerechnet als Metall, bezogen auf das Gewicht der Komponenten (a) bis (c) vor.

Die Hydrosilylierungsgeschwindigkeit wird von der ausgewählten Katalysatorverbindung, deren Menge sowie der Art und Menge einer zusätzlichen InhibitorKomponente (e) bestimmt.
Die Mengen des Katalysators werden durch die entstehenden Kosten nach oben begrenzt sowie die zuverlässige katalytische Wirkung nach unten. Daher sind Mengen oberhalb 100 ppm Metall meist unwirtschaftlich, Mengen unter 1 ppm unzuverlässig.
Besonders bevorzugt ist eine Konzentration der Komponente (d), bei der die Konzentration des Metalles zwischen 1-10 ppm noch bevorzugter bei 1-5 ppm liegt. Als Träger für die Katalysatoren können alle festen Stoffe ausgewählt werden, soweit sie die Hydrosilylierung nicht unerwünscht inhibieren, oder die Transparenz für die Photoaktivierung herabsetzen. Die Träger können ausgewählt werden aus der Gruppe der pulverförmigen Kieselsäuren oder -Gele oder organischen Harzen oder Polymeren und nach Maßgabe der gewünschten Transparenz eingesetzt werden, bevorzugt sind nicht trübende Träger.

### Hilfsstoffe (e)

### Inhibitoren

Die Geschwindigkeit der Hydrosilylierungsreaktion läßt sich bekanntlich durch eine Reihe von zusätzlichen Verbindungen, den sogenannten Inhibitoren (e) beeinflussen. Damit kann man weiteren Einfluß auf die Vernetzungsgeschwindigkeit nach Photoaktivierung nehmen, d.h. man bestimmt, bei welcher Temperatur und in welcher Zeit die Silikonzusammensetzung bzw. Kautschukmischung nach der Photoaktivierung zu einem elastomeren Formkörper aushärtet bzw. vulkanisiert.

Zweckmäßige Inhibitoren für die erfindungsgemäß photoaktivierbare Hydrosilylierung bei Platinkonzentrationen über 30 ppm Platin sind Inhibitoren, wie Vinylsiloxane, 1,3-Divinyltetramethyl-disiloxan oder Tetravinyltetramethyl-tetracyclosiloxan. Auch andere bekannte Inhibitoren wie beispielsweise Ethinyl-cyclohexanol, 3-Methylbutinol oder Dimethylmaleat können verwendet werden.

Die Inhibitoren dienen dazu, nach Photoaktivierung die Vernetzungsreaktion in gewünschter Weise zu verzögern.

Grundsätzlich können alle für die Klasse der Gruppe der Platinmetalle bekannten Inhibitoren eingesetzt werden, soweit nicht schon durch Auswahl der Liganden des Katalysators (d) eine ausreichend lange Verarbeitungszeit erzielt wird. Eine bevorzugte Ausführungsform ist es, den Katalysator ohne den Inhibitor einzusetzen.
Beispiele für die Vielzahl der bekannten Inhibitoren sind ungesättigte organische Verbindungen wie ethylenisch ungesättigte Amide (US 4 337 332); acetylenische Verbindungen (US 3 445 420, US 4 347 346), Isocyanate (US 3 882 083); ungesättigte Siloxanes, (US 3 989 667); ungesättigte Diester (US 4 256 870, US 4 476 166 and US 4 562 096), Hydroperoxide (US 4 061 609), Ketone (US 3 418 731); Sulfoxide, Amine, Phosphine, Phosphite, Nitrile ( US. 3 344 111), Diaziridine (US 4 043 977).
Die bekannteste Klasse der Inhibitoren sind die Alkinole, wie sie in US 3 445 420 beschrieben sind. Das sind z.B. Ethinylcyclohexanol und 3-Methylbutinol und die ungesättigten Carbonsäurester der US 4 256 870 sowie Diallylmaleat und Dimethylmaleat und die Fumarate der US 4 562 096 und US 4 774 111, wie Diethylfumarat, Diallylfumarat oder Bis-(methoxyisopropyl)maleat.
Aus der Reihe der ungesättigten Carbonsäureester sind bevorzugte Inhibitoren die Maleate und Fumarate der allgemeinen Formel

R^{w}(OW)ᵥO₂CCH=CHCO₂(WO)ᵥR^{w}

worin:
R^{w} wird ausgewählt aus der Gruppe der C₁-C₁₀ Alkylreste, wie Methyl, Ethyl, Propyl, Isopropyl, Butyl, usw., und Arylresten, wie Phenyl oder Benzyl, einem Alkenylrest wie Vinyl oder Allyl,
W wird unabhängig aus zweiwertigen C₂-C₄-Alkylenresten ausgewählt, der Index 'v' hat den Wert 0 oder 1.
Die Menge der Inhibitorkomponente wird so gewählt, dass die gewünschte Vernetzungszeit unter den gewählten Verarbeitungsbedingungen insbesondere in Abstimmung mit dem Katalysator (d) und den anderen Komponenten in geeigneter Weise, d.h. Zeit und Temperatur eingestellt werden kann. Die Menge der Inhibitorkomponente liegt bevorzugt bei 0,0001 bis 2 Gew. % eines oder mehrerer Inhibitoren bezogen auf die Menge der Komponenten (a) bis (c). Falls die Inhibitorkomponente angewendet wird, werden bevorzugt etwa 0,001 bis 0,5 Gew.%, besonders bevorzugt 0,05 bis 0,2 Gew.% Alkinole bei Metallgehalten der Komponente (d) von 10 bis 100 ppm zudosiert.
Bevorzugt wird der Inhibitor ausgewählt aus der Gruppe, die aus Alkinolen und Vinylsiloxanen besteht.
Ein Vorteil der erfindungsgemäßen Anwendung gegenüber rein thermisch härtenden Systemen, besteht darin, dass auf die Anwendung von Inhibitoren verzichtet werden kann, ohne dass verkürzte Topfzeiten in Kauf genommen werden müssen.

Die erfindungsgemäß verwendeten additionsvernetzenden Silikonkautschukmischungen enthalten weiterhin wahlweise weitere Hilfsstoffe (e), wie z.B. Weichmacher oder Trenn- oder Hydrophierungsöle, wie Polydimethylsiloxan-Öle, ohne reaktive Alkenyl- oder SiH-Gruppen mit einer Viskosität von vorzugsweise 0,001 - 10 Pa.s bei 25 °C. Darüber hinaus können zusätzliche Formtrennmittel wie Fettsäure- oder Fettalkoholderivate Verwendung finden. Hier sind die Verbindungen vorteilhaft, die sich schnell entmischen und an die Oberflächen migrieren. Die Stabilität nach Heißlufteinwirkung läßt sich beispielsweise mit bekannten Heißluftstabilisatoren, wie Fe-, Ti-, Ce-Verbindungen, und organische Salze davon bevorzugt ihrer organischen Komplexe erhöhen. Weiterhin können die erfindungsgemäß erhaltenen Formkörper auch organische Farbstoffe, wie trübende oder nicht trübende Farbstoffe enthalten.

Die Gesamtmenge der Hilfsstoffe (e) beträgt bevorzugt 0 bis 15 Gewichtsteile bezogen auf 100 Gewichtsteile der Komponente (a) und (b).

Die nach Photoaktivierung härtbaren Zusammensetzungen, die sich insbesondere für Herstellung von dickwandigen Formartikeln einsetzen lassen sind dadurch gekennzeichnet, dass diese Zusam-mensetzung enthält:
3 bis 99 Gew.-% wenigstens ein alkenylgruppen-haltiges Polysiloxan a),
0,2 bis 60 Gew.-% wenigstens ein SiH-funktionelles Polysiloxan b),
0,1 bis 60 Gew.-% wenigstens einen Füllstoff c),
wenigstens einen photoaktivierbaren Katalysator d), entsprechend einem Metallgehalt von 1 bis 500 ppm,
0 bis 30 Gew.-% eines oder mehrerer Hilfsstoffe e),
jeweils bezogen auf die Gesamtmenge der Komponenten a) bis c).

In einer bevorzugten Ausführungsform enthält die erfindungsgemäß verwendete Silikonzusammensetzung:
a) 100 Gewichtsteile mindestens eines alkenylgruppenhaltigen Polyorganosiloxans mit einem Viskositätsbereich von 0,025 und 500 Pa.s (25°C; Schergeschwindigkeitsgefälle D von 1 s⁻¹),
b) von 0,1 bis 200 Gewichtsteile mindestens eines Polyorganohydrogensiloxans, wobei 0,5 bis 20 mol, bevorzugt 1 bis 5 mol der SiH-Gruppen pro mol der Alkenylgruppen eingesetzt werden,
c) gegebenenfalls von 1 bis 100 Gewichtsteile eines oder mehrerer Füllstoffe,
d) von 0,5 bis 1000 ppm mindestens eines Hydrosilylierungskatalysators berechnet als Metall bezogen auf die Menge der Komponenten (a) bis (c),
e) gegebenenfalls von 0,0001 bis 2 Gew. % eines oder mehrerer Inhibitoren bezogen auf die die Menge der Komponenten (a) bis (c), und gegebenenfalls weitere Hilfsstoffe.

Die Anwendung der erfindungsgemäß verwendeten Silikonkautschuk-Zusammensetzungen ist erhältlich durch das Vermischen der Komponenten (a) bis (e), wobei zweckmäßig die Stoffe in bevorzugten Folgen vereinigt und vorzugsweise mindestens zwei Teilmischungen unmittelbar vor der Aktivierung vereinigt werden.
Das Vermischen der einzelnen Komponenten der Silikonkautschukmischung erfolgt dabei vorzugsweise in geeigneten Rührtöpfen, Statikmischern, insbesondere dynamischen Statikmischern, ebenso können auch Zweikomponenten- Mischdüsen, wie beim Sprühen mit Reaktivlacken üblich, verwendet werden.
Durchführbar ist auch die Kombination von allen möglichen Statikmischern und einfachen Spritzdüsen. Als bevorzugte Statikmischer haben sich die dynamischen Statikmischer, die mit Hilfe von rotierenden Mischelementen den Mischvorgang unterstützen, herausgestellt.

Zur Herstellung der beiden Teilmischungen mischt man vorzugsweise die Polyorganosiloxane (a), verstärkende Füllstoffe (c) und gegebenenfalls das zu (c) gehörige Hydrophobierungsmittel, vorzugsweise Hexamethyldisilazan und gegebenenfalls Divinyltetramethyldisilazan mit Wasser oder die daraus zuvor hergestellte Silanole bevorzugt bei Temperaturen von 10 bis 100 °C mindestens 20 Minuten bis 120 Minuten in einem für hochviskose Materialien geeigneten Mischaggregat, wie z.B. einem Kneter, Dissolver, Planetenmischer oder sonstigen Schneckenmischern. Anschließend verdampft man bei 120 bis 160°C die überschüssigen Hydrophobierungsmittel und Wasser bei Normaldruck, dann gegebenenfalls im Vakuum bei einem Druck von 100 bis 20 mbar.

In diese sogenannten Grundmischung werden je nach der gewünschter Zusammensetzung der (a) und (c) enthaltenden Teilmischungen weitere Komponenten wie die photoaktivierbare Komponente (d), und (e) und gegebenenfalls sogenannter nicht-verstärkender Füllstoff (c) zweckmäßig zwischen 10 bis 120 Minuten bei 10-160°C eingemischt. Dies ergibt beispielsweise eine Teilmischung (1). Dabei wird man zweckmäßig diese Komponente mit dem lichtaktivierbaren Katalysator mengenmäßig klein gegenüber der anderen Teilmischung halten, weil erstere vor Licht geschützt aufbewahrt werden muß.

Eine weitere Teilmischung (2) erhält man, in dem man der Grundmischung den Härter (b) zumischt. Gegebenenfalls können darüber hinaus auch die Komponenten (e) und gegebenenfalls sogenannter nichtverstärkender Füllstoff (c) zweckmäßig zwischen 10 bis 60 Minuten bei 10-160 °C zugemischt werden. In weiteren bevorzugten Ausführungsform wird dieser nicht verstärkende Füllstoff nach der Lichtaktivierung den Teilmischungen zugeführt. Durch Zusammengeben der Teilmischungen (1) und (2) zweckmäßig unter definiertem Lichtzutritt bzw.-Ausschluß wird die reaktionsfähige photoaktivierte bzw. photoaktivierbare Silikon-Zusammensetzung erhalten.

In einer bevorzugten Ausführungsform des Verfahrens stellt man die photoaktivierbaren, additionsvernetzenden Silikonkautschukmischungen über die Herstellung mindestens zweier Teilmischungen (1) und (2) her, die mehr als eine aber nicht alle der Komponenten (a) bis (e) umfasst, enthalten.
Die bevorzugte Aufteilung in Teilmischungen dient der besseren Handhabung und Lagerung. In dem man durch Aufteilung der reaktiven und katalysierenden Komponenten, enthaltend die Bestandteile (a) bis (e), die Reaktion dieser Komponenten miteinander bis unmittelbar vor Vereinigung aller Bestandteile vor der Photoaktiviuerung und Formgeben bzw. der weiteren Additivierung beispielsweise mit Pigmenten hinausschieben kann.
Zur Herstellung von nicht reagierenden Teilmischungen wird beispielsweise eine Teilmischung (1), bestehend aus den Komponenten (a), (c) und (d) und gegebenenfalls (e), sowie eine Teilmischung (2), bestehend mindestens aus den Komponenten (b) und gegebenenfalls (e), durch Mischen hergestellt. Aus Gründen einer zweckmäßigen Handhabung wird die Teilmischung (2) aus den Komponenten (a), (b), (c) und gegebenenfalls (e) gemischt.
Grundsätzlich sind alle möglichen Teilmischungen für eine längere Lagerung einsetzbar, so lange die Komponente (a), (b) und (d) nicht gleichzeitig in einer Teilmischung vorhanden sind und aktiviert werden. Deshalb trennt man zweckmäßig die Komponente (b) und (d), wenn gleichzeitig (a) vorliegt oder man trennt (b) und (a), wenn gleichzeitig (d) in derselben Teilmischung vorliegt.

Der Bestandteil (d) kann mehr oder weniger vorteilhaft in jeder der Komponenten vorgehalten werden, soweit nicht gleichzeitig die miteinander reagierenden Komponenten (a), (b) nebeneinander vorliegen und Komponente (d) lichtgeschützt gelagert werden kann. Der Inhibitor (e) kann in jeder Teilmischung vorliegen, bevorzugt ist die Kombination in einer Teilmischung mit (b).
Damit die erfindungsgemäß verwendete Silikonzusammensetzung eine ausreichende Fließfähigkeit besitzt, beträgt die Viskosität unmittelbar nach dem Mischen der oben beschriebenen Teilmischungen mit Katalysatorkomponente (d) vor der Formgebung weniger als 3000 Pa.s (25°C) bei einem Schergeschwindigkeitsgefälle D = 10 s⁻¹, bevorzugt weniger als 1000 Pa.s. Das Verhältnis von Elastizitätsmodul zu Verlustmodul d.h. G' zu G," liegt bei unter 1.

In einer bevorzugten Ausführungsform des erfindungsgemäßen Verfahrens ist die Silikonzusammensetzung nach Photoaktivierung von 0,01 bis 100 sec innerhalb von weniger als 6 min härtbar, d.h. nach dieser Zeit wird eine klebfreie Oberfläche erhalten. Klebfrei heißt, dass ein auf der Oberfläche aushärtendes reaktives Gießharz abgetrennt werden kann.

In einer weiteren bevorzugten Ausführungsform des erfindungsgemäßen Verfahrens weist die Silikonzusammensetzung eine Gelzeit 30 bis 900 s bei 30° C gemessen in einem UV-Vulkameter ausgewertet nach ASTM D 4473 auf.

Die für Herstellung dickwandiger Formartikel verwendeten licht-aktivierbaren, härtbaren Zusammensetzungen werden zur Photoaktivierung mit Licht einer Wellenlänge im Bereich von 200 bis 500 nm bestrahlt.

Dazu werden die lichtaktivierbaren, härtbaren Zusammensetzung bevorzugt in eine Form eingefüllt wird, deren Oberfläche mindestens einen Bereich aus einem UV-durchlässigen Material aufweist, dass aus Quarz oder UV-durchlässigen Kunststoffen besteht. Das sind somit entweder Formen oder Belichtungsstationen, die vollständig aus einem UV-durchlässigen Material bestehen oder ein Fenster aufweisen mit einer Größe von mehr als 0,1 cm² lichter Öffnung gegenüber der Strahlenquelle.

In einer Ausführungsform wird die Zusammensetzung in der Weise verwendet, dass die Photoaktivierung an einem zur Formgebung getrennten Ort stattfindet. Bei dieser Verwendung ist die Bestrahlungsdauer dadurch gekennzeichnet, dass sie kürzer als die Gelzeit der härtbaren Siloxanzusammensetzung ist. Bevorzugt beträgt die Bestrahlungsdauer bei einer gegebenen Bestrahlungsintensität weniger als 1/10 der Gelzeit. Damit wird erreicht, dass die erhaltene, noch fließfähige Zusammensetzung gegebenenfalls nach Füllstoff- und/oder Pigmentzusatz in eine nachfolgende Form bzw. einen folgenden Formgebungsprozess überführt oder auf ein Substrat aufgetragen werden kann und dort ohne weitere Bestrahlung gegebenenfalls bei erhöhter Temperatur aushärtet.

In einer weiteren Ausführungsform kann die erfindungsgemäße Zusammensetzung dergestalt verwendet werden, dass die zunächst der Bestrahlung unterworfene lichthärtbare Zusammensetzung vor der Überführung in eine Form, vor einem Formgebungsprozess bzw. vor dem Auftragen auf ein Substrat mit mindestens einem Pigment und/oder Füllstoff versetzt wird, insbesondere, wenn diese Zusätze die Transparenz verringern.

Die erfindungsgemäßen Zusammensetzungen können zur Herstellung von Hochspannungsisolatoren, Formed-in-place-Gaskets, prothetischen Formartikeln oder Abformungen verwendet werden.

Die vorstehend beschriebenen Zusammensetzungen, insbesondere diejenigen, die die nach dem erfindungsgemäßen Verfahren erhaltenen oberflächenmodifizierten oxidischen Füllstoffe enthaltenden Zusammensetzungen, werden beispielsweise zur Herstellung von Formartikeln und Abformmassen verwendet. Diese Füllstoffe dienen dabei der Verstärkung der (gummi)mechanischen Eigenschaften. Bevorzugte Beispiele der genannten Formartikel sind beispielsweise Abformmassen, wie Zahnabdruckmassen, Dichtungen, wie sogenannte "formed-in-place"-gaskets, sogenannte "conformal coatings" (Einbettungsmassen), Kabel-(stecker)-dichtungen, Kabelgarnituren, beliebige Formartikel, wie (Präge-)Stempeln und (Präge-)-Druckkissen für den "Padprinting"-Prozess, Drucktinten (niedrigviskose Massen zum Kennzeichnen oder Beschriften von flexiblen Substraten).

Abformmassen oder Formartikel schließt auch Herstellung von prothetischen Artikeln unter Verwendung der erfindungsgemäßen härtbaren Zusammensetzung als Abformmassen wie auch als zu verwendender Formartikel ein, wie beispielsweise Ersatzgliedmaße, an Körperformen angepasste prothetische, kosmetische oder medizinische Hilfsmittel, wie Hörmuscheln für Hörgeräte oder Schallschutz für den Arbeitsbereich, körperähnliche Imitate zur Bereitstellung ästhetisch gestalteter Prothesen, Fußbetten, Einlegesohlen, Sitz- und Liegehilfen, wie Matrazen oder Kopfstützen oder der Fixierung von Gliedmaßen während der medizinischen Behandlung.
Die genannten erfindungsgemäß hergestellten Formartikel oder Abformmassen werden zweckmäßig durch Härten der Zusammensetzungen nach Lichteinwirkung erhalten. Bevorzugt werden die Zusammensetzungen in Formen ge-gossen oder als photoaktivierbare, härtbare Giessmasse angeboten.

Die nach dem erfindungsgemäßen Verfahren erhaltenen dickwandigen Formartikel weisen bevorzugt eine Lichtdurchlässigkeit, gemessen bei einer Dicke von 10 mm von weniger als 10%, bevorzugter weniger als 5 % auf, gemessen als Transmission mit einem Fotometer bei 400 nm.

Die Erfindung stellt auch ein Verfahren zur Herstellung von dickwandigen Formartikeln Beschichtungen bereit, das dadurch gekennzeichnet ist, dass die lichtaktivierbare, härtbare Zusammensetzung mit Licht einer Wellenlänge im Bereich von 200 bis 500 nm bestrahlt wird, wobei die Bestrahlungsdauer kürzer als die Gelzeit ist, und die erhaltene Zusammensetzung anschließend in eine Form, in einen Formgebungsprozeß überführt oder auf ein Substrat aufgetragen wird und dann ohne weitere Bestrahlung gegebenenfalls bei erhöhter Temperatur ausgehärtet wird. Die Bestimmung der Gelzeit erlaubt die genaue Vorhersage der Verarbeitungsparameter, die Auswahl vorteilhafter Verarbeitungsprozesse und Einstellung auf die gewünschten Verfahrensbedingungen.

Zur genauen Bestimmung der Vernetzungszeiten führt man dazu eine Vernetzung entweder in einem Vulkameter nach DIN 53529 oder was hier besonders bevorzugt ist, mit einem UV-Vulkameter der Fa. Thermo Haake Karlsruhe durch, um die durch Lichtaktivierung initiierte Vernetzungsreaktion verfolgen zu können. Dabei kann über die Messung der sogenannten t-Werte, wie t₁₀ bzw. t₉₀, eine Zeit bestimmt werden, nach der bei gegebener Temperatur ein 10%- bzw. 90%-iger Anstieg des Drehmomentes bezogen auf den Endwert des Drehmomentes nach vollständiger Vernetzung stattgefunden hat.

Als Kriterium für die Verarbeitbarkeit der bevorzugt relativ niedrigviskosen SiloxanZusammensetzungen hat sich die Messung des Gelpunktes mit dem UV-Vulkameter insbesondere nach den Kriterien der ASTM D 4473 als vorteilhaft herausgestellt. Ähnliche Bewertungen finden sich in Thomas G. Metzger, The Rheology Handbook, Vincentz Verlag 2002, Seite 143 oder nach DIN ISO 16945, DIN ISO 9396 mit dem Geltimer. Der Gelpunkt kennzeichnet dabei rheologisch den Zustand, bei dem der Elastizitätsmodul G'= G" ist, wobei G" den Verlustmodul meint. Die Gelzeit ist dementsprechend die Zeit nach Beginn der Bestrahlung und Stehenlassen bei 25°C bis zum Gelpunkt, bei dem G'= G" ist.
Hiermit läßt sich die Vernetzungszeit kontrollieren, eine Aussage zur Verarbeitbarkeit treffen und lassen sich Maßnahmen zur Steuerung der Reaktionsgeschwindigkeit treffen.

Diese Verfahren zur Verwendung der erfindungsgemäßen Zusammensetzungen schließen als weitere Ausführungsform ein, dass die der Bestrahlung unterworfene lichtaktivierbare, härtbare Zusammensetzung vor der Überführung in die Form, dem Formgebungsprozeß bzw. vor dem Auftragen auf ein Substrat mit mindestens einem Pigment und/oder Füllstoff versetzt wird. Das bedeutet beispielsweise, dass die lichtaktivierbare Zusammensetzung eine Belichtungstation, wie zum Beispiel eine transparente Zuleitung zu einer Aushärteform, durchläuft, wo sie aktiviert wird und dann einem Formgebungsprozeß zugeführt wird, wo anschließend die Härtung stattfindet.

Ein weiteres Verfahren zur Herstellung von dickwandigen Formartikeln ist dadurch gekennzeichnet, dass die lichtaktivierbare, härt-bare Zusammensetzung in eine Form eingefüllt wird, deren Oberfläche mindestens einen Bereich aus einem UV-durchlässigen Material aufweist, das aus Quarz oder UV-durchlässigen Kunststoffen besteht, und mit Licht einer Wellenlänge im Bereich von 200 bis 500 nm bestrahlt wird. Diese für die Lichtaktivierung geeignete Fenster wird zweckmäßig mindest eine Größe haben, wie oben definiert, wenn es als einziges Fenster vorhanden ist. Bei einer Vielzahl von Fenstern sind auch kleinere Flächen einsetzbar.

Das Verfahren zur Lichtaktivierung bzw. die Verwendung der lichtaktivierbaren härtbaren Zusammensetzungen erfolgt unter Aktivierung mit UV-Bestrahlung der Wellenlänge 180 - 700 nm, gebenenfalls unter Verwendung von Sensibilisatoren, bevorzugt bei 200 - 500 nm. Der Zusatz von handelsüblichen Sensibilisatoren, wie Benzophenonen usw. erlaubt die Aktivierung mit längerwelligem Licht bzw. besseren Lichtausbeuten.

In den erfindungsgemäßen Verfahren bzw. bei der erfindungsgemäßen Verwendung der Zusammensetzung zur Herstellung dickwandiger Formartikel oder Beschichtungen wählt man für die Lichtaktivierung eine UV-Strahlenquelle aus der Gruppe der UV-Strahler wie Xenonlampen die als Blitzlichtlampen betrieben werden können, undotierte oder mit Eisen oder Gallium dotierte Quecksilberlampen, Schwarzlicht- und Eximerlampen. Die Belichtungsintensität (Strahlendosis x Belichtungszeit pro Volumenelement) wird in Abhängigkeit vom gewählten Verfahren, von der gewählten Zusammensetzung der Massetemperatur so gewählt, dass eine ausreichende Verarbeitungszeit resultiert.

Die gewünschten oben genannten dickwandigen Formartikel sind nach den zuvor genannten Verfahren erhältlich. Dickwandige Formartikel, die nach dem erfindungsgemäßen Verfahren erhalten werden, sind insbesondere solche, deren Volumen eine Kugel mit einem Durchmesser von mindestens 3 mm, bevorzugter mindestens 5 mm und noch bevorzugter mindestens 10 mm aufnehmen bzw. umschließen können.

Damit können dickwandige Formartikel wie beispielsweise ein Hochspannungsisolator oder eine Formed-in-place-Gasket hergestellt werden, ohne die direkte Belichtung des geformten Artikel bzw. der Dichtung. Das niedrige Temperaturniveau bei der Härtung von 0 °C bis vorzugsweise 80 °C, bevorzugter 10 bis 40°C bewirkt einen besonders geringen Schrumpf. Damit wird die Entformung insbesondere von großvolumigen oder großflächigen Formkörpern mit Hinterschneidungen bzw. Vertiefungen deutlich erleichtert.

Die erzeugten großvolumigen Formartikel weisen eine ausgezeichnete elektrische Beständigkeit wie Hochspannungskriechstrom (IEC 587) oder Lichtbogenfestigkeit auf.

Die Zusammensetzungen bzw. das Verfahren kann auch dazu verwendet werden, um dickwandige Beschichtungen, wie die einer Conformal-Coating-Beschichtung zu ermöglichen. Derartige Beschichtungen dienen beispielsweise dem Schutz vor Staub oder mechanischer Erschütterung oder werden als Dämpfungsschicht für mechanisch belastete Relais, elektronische Schaltungen in Fahrzeugen, Flugzeugen, Pumpen, beweglichen Aggregaten oder Festplattenlaufwerken in Computern eingesetzt.

### Beispiele

Durchführung der Lichthärtung und Messung der Vernetzungsgeschwindigkeit.

Als Lichtquellen für die Härtung wurden verschiedene Lampentypen eingesetzt:
- (XA) Blitzlampe (Xenon) (Fa. Blässing, Essen), mit einer Leistungsabgabe von 34,9 J/ Einzelblitz bei 12,5 Hz.
- (XB1) UV- Quecksilber-Hochdrucklampen mit (Eisen-, Gallium-Dotierung) Leistung 400- 8000 W, Fa. Hönle, München,
- (XB2) Fa. Heraeus Noblelight Hanau Mitteldruckstrahler ohne und mit Dotierung (Eisen, Gallium ) mit einer Leistung: 150 - 8000 W
- (XC) Philips UV Mitteldrucklampe Cleo Swift HPA 400 W.

Die Vulkanisation der nach Lichtaktivierung vernetzenden Silikon-Zusammensetzung wurde nach den Methoden der Beispiele 4 bis 8 durchgeführt:
Zur Bestimmung der Vernetzungsgeschwindigkeit außerhalb der erfindungsgemäßen Verarbeitungsverfahren wurden die reaktiven Mischungen zusätzlich mit einem Rheometer der Fa. Thermo Haake, Karlsruhe RheoStress 600 bestehend aus einer Messeinheit mit einer Quarzglasplatte (unten) / 20mm Titan-Platte (oben) bewertet.
Als Lichtquelle diente eine UV Punktlichtquelle UV-LQ 400/C von Dr. Göbel UV-Elektronik GmbH, Ettlingen, ausgerüstet mit Philips UV Lampe Cleo Swift HPA 400 W mit einem Abstand zur Probe von 33 mm, die auf 80% der Leistung begrenzt war. Die Auswertung der Messergebnisse erfolgte mit der Haake RheoWin Pro Software.
Dazu führte man 0,75 g einer Mischung, die zuvor unter Lichtausschluss per Hand mit einem Rührstab aus den Teilmischungen 1 bis 3 der Beispiele 2 oder 3 nach individueller Bestrahlung erzeugt wurden zu, nach dem diese zuvor im Vakuum bei 20 mbar entgast wurden. Anschließend belichtete man diese Mischung mit der UV Punktlichtquelle über die jeweils genannte Zeit. Damit sollte u.a. ungefähr die in den jeweiligen Verfahren angewandten Bestrahlungszeiten auf die Vernetzungsgeschwindigkeit simuliert werden.
   Die Moduli G' und G" wurden mit dem Rheometer per Oszillation im Zeit-Deformation-Modus (Sweep 2 Hz, CD, controlled stress 0,01 +/- 0,001 (dimensionslose Geräteeinstellung)) über 10 Minuten bei 25 °C gemessen.

### Referenz-Beispiel 1 Conformal Coating -Zusammensetzung

### Teilmischung 1

In einem Rührtopf vermischt man unter Lichtausschluß 5 Gew.teile Dimethylvinylsiloxy-endgestopptes Polydimethylsiloxan (a1) mit einer Viskosität von 200 mPa.s (25°C). In diese Mischung gibt man vor Licht geschützt 0,26 Gew.teile eines Katalysator, der aus 1000 Gew.teilen eines linearen vinylendgestoppten Polydimethylsiloxans mit der Viskosität 1 Pa.s bei 25 °C mit einem Vinylgehalt von 0,13 mmol/g sowie 1 Gew.-teil Trimethyl-(methyl)-cyclopentadienyl-platin (Fa. Strem) mit einem Platingehalt von 61,1% besteht. Die Mischung wird bis zur Belichtung unter Ausschluß von Licht aufbewahrt.

### Teilmischung 2

In einem Rührtopf vermischt man 45 Gew.teile Dimethylvinylsiloxy-endgestopptes Polydimethylsiloxan (a1) mit einer Viskosität von 200 mPa.s (25°C) und mit einem Vinylgehalt von 0,3 mmol/g 4 Gew.teile bei ca. 25 °C eines Trimethylsiloxy-endgestoppten Polyhydrogenmethyl-dimethylsiloxane der Formel M₂D₂₀D^{H}₂₀ mit 7,4 mmml/g SiH und einer Viskosität von 40 mPa.s.

### Beispiel 2 Harte Mischung

Herstellung einer nach Aktivierung durch UV-Licht nicht transparenten Silikon-Zusammensetzung hoher Härte

In einem Kneter werden 51,05 Gew.teile eines dimethylvinylsiloxy-endgestopptes Polydimethylsiloxans (a1) mit einer Viskosität von 0,2 Pa.s bei 25°C, 12,5 Gew.teile dimethylvinylsiloxyendgestoppten Polydimethylsiloxans (a1) mit einer Viskosität von 1 Pa.s bei 25°C mit 24 Gew.teilen Kieselsäure EXP 6303 (Degussa mit BET 85 m²/g) (c) für ca. eine Stunde bei 30°C bis 40°C vermischt.

### Teilmischung 2

In einem Kneter werden 32,25 Gew.teile eines dimethylvinylsiloxy-endgestopptes Polydimethylsiloxans (a1) mit einer Viskosität von 0,2 Pa.s bei 25°C, 12,5 Gew.-teile dimethylvinylsiloxyendgestoppten Polydimethylsiloxans (a1) mit einer Viskosität von 1 Pa.s bei 25°C mit 24 Gew.teilen Kieselsäure EXP 6303 Füllstoff (c) für ca. eine Stunde bei 30°C bis 40°C vermischt.

Zu 68,7 g dieser Teilmischung gibt man nach dem Erkalten 18,8 Gew.teile eines Vernetzers bestehend aus einem Trimethylsiloxy-endgestopptem Polydimethylhydrogenmethylsiloxan und einem SiH-Gehalt von 7,4 mmol/g 40 mPa.s bei 25 °C der allgemeinen Formel M₂D₂₀D^{H}₂₀.

### Teilmischung 3

In die Teilmischungen 1 und 2 gibt man, wie später beschrieben, die vor Licht geschützte Teilmischung 3, enthaltend 2,9 Gew.teile eines Katalysator, der aus 1000 Gew.teilen eines linearen vinylendgestoppten Polydimethylsiloxans mit der Viskosität 1 Pa.s bei 25 °C mit einem Vinylgehalt von 0,13 mmol/g sowie 1 Gew.teil Trimethyl-(methyl)-cyclopentadienyl-platin (Fa. Strem) mit einem Platingehalt von 61,1 % gemischt wurde. Die Teilmischung 3 bzw. die den Katalysator (d) enthaltende Teilmischungen muß unter Lichtausschluß aufbewahrt werden.

### Beispiel 3 Herstellung einer Silikon-Zusammensetzung für Isolatoren

In einem Kneter werden 19,8 Gew.teile dimethylvinylsiloxy-endgestopptes Polydimethylsiloxan (a1) mit einer Viskosität von 10 Pa.s bei 25°C, 2,4 Teilen Hexamethyldisilazan, 0,028 Gew.teile 1,3-Divinyltetramethyldisilazan und 1,14 Gew.teile Wasser gemischt, anschließend mit 9,3 Gew.teilen pyrogener Kieselsäure (c) mit einer BET-Oberfläche von 300 m²/g vermischt, auf ca. 100°C erwärmt, ca. eine Stunde gerührt und danach bei 150°C bis 160°C von Wasser und überschüssigen Silazan-/Silanolresten durch Verdampfen befreit (zum Schluß Vakuum bei p = 20 mbar). Anschließend verdünnt man mit 16,75 Gew.teilen eines dimethylvinylsiloxyendgestoppten Polydimethylsiloxans (a2) mit einer Viskosität von 10 Pa.s.

### Teilmischung 2

In einem Kneter werden 19,8 Gew.teile dimethylvinylsiloxy-endgestopptes Polydimethylsiloxan (a1), 2,73 Gew.-teile Hexamethyldisilazan, 0,035 Gew.teile 1,3-Divinyltetramethyldisilazan und 1,14 Gew.teile Wasser sowie mit 10,95 Gew.teile pyrogener Kieselsäure (c) mit einer BET-Oberfläche von 300 m²/g vermischt, anschließend auf ca. 100°C erwärmt, ca. eine Stunde gerührt und danach bei 150°C bis 160°C von Wasser und überschüssigen Silazan-/Silanolresten durch Verdampfen befreit (zum Schluß Vakuum bei p = 20 mbar). Diese Mischung wird anschließend mit 2,26 Gew.teilen dimethylvinylsiloxy-endgestopptem Polydi - methylsiloxan (a2) mit einer Viskosität von 10 Pas verdünnt.

Zu 34 g dieser Teilmischung gibt man nach dem Erkalten 10,9 Gew.teile eines Vernetzergemisches bestehend aus Dimethylhydrogensiloxy-endgestopptem Polydimethylhydrogen-methylsiloxan mit der Viskosität 1000 mPa.s bei 25 °C mit einem SiH-Gehalt von 0,12 mmol/g der allgemeinen Formel M^{H}₂D₂₀₀ , 1,14 Gew.-teile eines Trimethylsiloxy-endgestopptem Polydimethylhydrogen-methylsiloxan und einem SiH-Gehalt von 4,15 mmol/g 35 mPa.s bei 25 °C der allgemeinen Formel M₂D₂₀D^{H}₁₀, 0,57 Gew.-teile eines Trimethylsiloxy-endgestopptem Polydimethylhydrogen-methylsiloxan und einem SiH-Gehalt von 2,3 mmol/g mit einer Viskosität von 40 mPa.s bei 25 °C der allgemeinen Formel M₂D₁₀₀D^{H}₂₀.

### Teilmischung 3

In die Teilmischungen 1 und 2 gibt man, wie später beschrieben, die vor Licht geschützte Teilmischung 3, enthaltend 1,88 Gew.teile eines Katalysator, der aus 4000 Gew.teilen eines linearen vinylendgestoppten Polydimethylsiloxans mit der Viskosität 1 Pa.s bei 25 °C mit einem Vinylgehalt von 0,13 mmol/g sowie 1 Gew.teil Trimethyl-(methyl)-cyclopentadienyl-platin (Fa. Strem) mit einem Platingehalt von 61,1% gemischt wurde. Die Teilmischung 3 bzw. die den Katalysator (d) enthaltende Teilmischungen muß unter Lichtausschluß aufbewahrt werden.

### Beispiel 4 Härtung in der offenen Form

Die beiden Teilmischungen des Beispieles 1 wurden unter Lichtausschluß in einem lichtundurchlässigen Gefäß durch Taumelbewegungen gemischt und in eine beschichtete Metallform mit einem zylindrischen Formennest mit 40 mm Durchmesser und 50 mm Höhe unter Lichtausschluss gefüllt. Nach einer Ruhezeit von ca. 5 min wird weitestgehend Blasenfreiheit erreicht. Die offene Stirnseite des Zylinders wird mit der UV-Blitzlampe (XA) in einem Abstand von 40 mm für 120 sec. bei 25°C belichtet. Anschließend wurde ein zylindrischer Formkörper entnommen, der im wesentlichen die Maße des zylindrischen Formennestes aufwies. Die Härte des zylindrischen Formkörpers wurde nach unterschiedlichen Lagerzeiten bei 25 °C nach Shore A gemäß DIN 53505 sowohl an der Oberfläche als auch an dem in der Mitte durchschnittenen, geteilten zylindrischem Formkörper bestimmt.

| Lagerzeit nach Belichtung | Oberfläche Härte [°] Shore A | Mitte Härte [°] Shore A |
|---|---|---|
| 1 min | 40 | 40 |
| 6 h | 43 | 42 |
| 24 h | 44 | 43 |

Es zeigt sich, dass dickwandige Formkörper hergestellt werden können, die im wesentlichen überall gleichmäßig ausgehärtet sind.

### Beispiel 5 Verfahren zur Herstellung von Formkörpern mittels transparenter Formen

Ein Quarzglasrohr (Heraeus Quarzglas HSQ 300 Wanddicke 3 mm) mit 52 mm Innendurchmesser, Länge 104 mm mit je einer an den Stirnseiten einer angeflanschten Metallscheibe wird mit einer Mischung aus den Teilmischungen 1 und 2 des Beispieles 2, im Verhältnis 1:1, sowie Teilmischung 3, in einer Menge wie in Beispiel 2 angegeben, gefüllt. Die Mischung wurde erhalten über eine 2 K 900 Silko Mix Dosiermaschine der Fa. 2KM Marienheide, ausgerüstet mit einer Dreikomponenten-Mischeinrichtung (Additiv-Linie) und einem 30 cm langen Statikmixer ( Fa. Kennix). Das Quarzglasrohr wurde unter Lichtausschluß über Metallleitungen mit einer Füllgeschwindigkeit von 100 cm³/min bei einem Forminnendruck bis 10 bar in ca. 120 Sekunden blasenfrei befüllt. Nach dem Befüllvorgang wird mit einer Lampe des Typs (XA) in einem Abstand von 40 mm für 240 sec bestrahlt. Die Formtemperatur erhöhte sich während der Bestrahlung auf ca. 40° C.
Der nach 3 Minuten aus dem Quarzrohr entnommene Zylinder weist an der Oberfläche eine Härte von 62 ° Shore A und im Mittelpunkt eine Härte von 61 °Shore auf, die nach 24 h auf 65 ° Shore A anstiegen.
Die an einer 10 mm Dicke ermittelte Transmission liegt für eine Messung bei 400 nm bei unter 10 %. Die Abweichung der Formkörperlänge von der Rohrlänge liegt bei 25°C unterhalb von 0,1 %.

Dieses Beispiel zeigt, dass auch Füllstoff-haltige dickwandige Formkörper mit gleichmäßiger Vernetzung und hoher Härte erhalten werden können.

### Beispiel 6 Verfahren mit Lichtaktivierung und erwärmter Form

Der Versuch von Beispiel 4 wird wiederholt mit der Maßgabe, dass das Quarzglasrohr mit angeflanschten Metallstirnflächen auf eine Temperatur von 70 °C gebracht wurde.
Die Mischung aus den Teilmischungen des Beispieles 2 wird über den genannten Statikmischer in den zuvor genannten Verhältnissen vermischt und mit einer Füllgeschwindigkeit von 100 cm³/min bei einem Forminnendruck bis 10 bar blasenfrei befüllt. Nach dem Befüllvorgang wird mit einer Lampe des Typs (XA) in einem Abstand von 80 mm für 120 sec bei 60 -70 °C Formentemperatur belichtet.
Der nach einer Minuten aus dem Quarzrohr entnommene Zylinder weist an der Oberfläche eine Härte von 63 ° Shore A und im Mittelpunkt eine Härte von 62 °Shore auf, die nach 24 h auf 65 ° Shore A anstiegen.
Der Abweichung des Formkörperlänge von der Rohrform liegt bei 25°C unterhalb 0,2 %.
Dieses Beispiel zeigt, dass bei Bestrahlung dickwandiger Formartikel, die gleichmäßig vernetzt sind, diese nach kürzerer Zeit erhalten werden, wenn sie in einer erwärmten Form gehärtet werden.

### Beispiel 7 Herstellung eines dickwandigen Formartikels mit Hilfe einer Belichtunqsstation

Die Mischung aus den Teilmischungen 1 und 2 des Beispieles 2 wird im Verhältnis 1:1 zusammen sowie mit dem für Teilmischung 3 genannten Verhältnis über die Vorrichtung aus Beispiel 5 vermischt und mit einer Füllgeschwindigkeit von 100 cm³/min durch ein Quarzglasrohr mit einem Innendurchmesser von 12 mm und 110 mm Länge sowie einer Wandstärke von 3 mm geleitet. Das Quarzrohr ist in einer Umhausung symmetrisch von 3 Lampen des Typs (XB1) in einem Abstand von 40 mm umgeben, die das transparente Rohr der Belichtungsstation kontinuierlich belichten und mit einer Leistung von 3x 400 W betrieben wurden.

Die durchfließende Mischung der Teilkomponenten wird rechnerisch für 8 sec bei 30°C bestrahlt

Die durchfließende aktivierte Silikonkautschuk-Zusammensetzung wird in eine zylindrische Form Innendurchmesser 52 mm, Länge 104 mm aus Glas mit jeweils Metallstirnflächen an den kreisförmigen Enden gefördert, die auf einer Temperatur von 80°C gehalten wird. Die Form wird innerhalb von 132 Sekunden gefüllt.
Der nach 4 Minuten entnommene Zylinder weist an der Oberfläche eine Härte von 21 ° Shore A und in Mitte eine Härte von 20 °Shore auf.
Der Abweichung des Formkörperlänge von der Rohrform liegt bei unter 0,2 % .

Wenn diese Mischung dem oben beschriebenen UV-Vulkameter der Fa. Haake zugeführt wird, ergibt sich für eine Belichtungszeit von 8 sec eine Gelzeit für den Gelpunkt G'= G" (ASTM D 4473 ) von 295 sec bei 25°C.

Das gehärtete Elastomer wies nach Überführung in normgerechte Testplatten folgende Eigenschaften auf:

| | | |
|---|---|---|
| Zugfestigkeit DIN 53504 | N/mm², | 4,8 |
| Bruchdehnung | %, | 670 |
| Weitereißfestigkeit ASTM 624 Probekörper B | N/mm | 38,7 |
| Härte DIN 53505 | °Shore A, | 21 |
| Dichte | g/ml | 1,097 |
| Hochspannungskriechstromfestigkeit nach IEC 587 | kV | 4,5 |
| Lichtbogenfestigkeit | sec | 360 |
| Masseverlust | Gew.-%. | 1,12 |

Dieses Beispiel zeigt, dass es nach dem erfindungsgemäßen Verfahren möglich ist, die Siloxan-Zusammensetzung zu bestrahlen und anschließend ausreichend Zeit besteht, die aktivierte Zusammensetzung in eine Form zu füllen und gegebenenfalls vorher mit Füllstoff zu vermischen. Auch bei dieser Verfahrensweise werden gleichmäßig vernetzte, dickwandige Formkörper, die hohe mechanische Festigkeit sowie eine besonders gute Hochspannungskriechstromfestigkeit und Lichtbogenfestigkeit aufweisen.

### Beispiel 8 Herstellung eines dickwandigen Formartikels mit Hilfe einer Belichtungsstation

Die Mischung aus den Teilmischungen 1 und 2 des Beispieles 2 wird im Verhältnis 1:1 zusammen sowie mit dem für Teilmischung 3 genannten Verhältnis über die Vorrichtung aus Beispiel 5, die in diesem Fall 4 Komponenten dosieren kann, im ersten Mischkopf und Statikmischer vermischt und mit einer Füllgeschwindigkeit von 100 cm³/min durch ein Quarzglasrohr mit einem Innendurchmesser von 12 mm und 110 mm Länge sowie einer Wandstärke von 3 mm geleitet. Das Quarzrohr ist in einer Umhausung symmetrisch von 3 Lampen des Typs (XB1) in einem Abstand von 40 mm umgeben, die das transparente Rohr der Belichtungsstation kontinuierlich belichten und mit einer Leistung von 3x 400 W betrieben wurden.
Die durchfließende Mischung der Teilkomponenten wird rechnerisch für 8 sec bei 30°C bestrahlt
Zwischen das Bestrahlungsrohr und der Form wurde 2. Mischkopf und ein 30 cm langer Statikmischer (Fa. Kennix) eingebaut. An diesen führte man zusätzlich eine 4. Mischung, bestehend aus einem dimethylvinylsiloxy-endgestoppten Polydimethylsiloxan (a1) mit einer Viskosität von 20 Pa.s bei 25°C, welches zusätzlich 17 Gew.-% Pigmente (Ruß +TiO2) enthielt (Silopren® Farbpaste Grau), in einer Menge 3 cm³/min über die zuvor genannte 2K 900 Silko Mix Dosiermaschine als 4. Komponente ein.

Die durchfließende aktivierte Silikonkautschuk-Zusammensetzung wird in eine zylindrische Form Innendurchmesser 52 mm, Länge 104 mm aus Glas mit jeweils Metallstirnflächen an den kreisförmigen Enden gefördert, die auf einer Temperatur von 80°C gehalten wird. Die Form wird innerhalb von 133 Sekunden gefüllt und enthält einen dunkelgrau gefärbten weitgehend lichtundurchlässigen Formkörper mit einer Transmission von weit unter 5 % pro 10 mm.
Der nach 4 Minuten entnommene Zylinder weist an der Oberfläche eine Härte von 62 ° Shore A und in Mitte eine Härte von 61 °Shore auf, die nach 24 h auf 65 ° Shore A anstiegen.
Der Abweichung des Formkörperlänge von der Rohrform liegt bei unter 0,2 %. Wenn diese Mischung dem oben beschriebenen UV-Vulkameter der Fa. Haake zugeführt wird, ergibt sich für eine Belichtungszeit von 8 sec eine Gelzeit für den Gelpunkt G'= G" (ASTM D 4473) von 300 sec bei 25°C.

Dieses Beispiel zeigt, dass es nach dem erfindungsgemäßen Verfahren möglich ist, einen pigmentierten, nicht mehr transparenten Formkörper oberhalb 60° Shore A durch Lichtaktivierung herzustellen, wobei bei dieser Verfahrensweise gleichmäßig vernetzte, dickwandige Formkörper erhalten.

## Patentansprüche

1. Verwendung einer lichtaktivierbaren, härtbaren Siloxanzusammensetzung, enthaltend:
a) 3 bis 99 Gew.-% mindestens ein Polyorganosiloxan mit im Mittel mindestens zwei ungesättigten organischen Gruppen pro Molekül, wobei das Polyorganosiloxan ein alkerylgrupper-haltiges Polysiloxan ist,
b) 0,2 bis 60 Gew.-% mindestens ein Polyhydrogenrganosiloxan mit im Mittel mindestens zwei SiH-Gruppe pro Molekül,
c) 0,1 bis 60 Gew.-% mindestens einen oxidischen Füllstoff mit einer BET-Oberfläche von 50 bis 400 m²/g.
d) mindestens einen photoaktivierbaren Katalysator, enthaltend ein Metall ausgewählt aus der Gruppe, die besteht aus Pt, Ru, Rh, Pd, Ir oder Ni oder eine Verbindung des genannten Metalls, entsprechend einem Metallgehalt von 1 bis 500 ppm,
e) 0 bis 30 Gew.-% einen oder mehrere Hilfsstoffe,
jeweils bezogen auf die Gesamtmenge der Komponenten a) bis c).
zur Herstellung von dickwandigen Formartikeln, deren Volumen eine Kugel mit einem Durchmesser von mindestens 3 mm aufnehmen kann.

2. Verwendung nach Anspruch 1, wobei die Komponente a) ein alkenylgruppenhaltiges Polyorganosiloxan der Formel (I) ist
[Mₐ₁D_{b1}T_{c1}Q_{d1}R²ₑ₁]ₘ₁ (I)
worin
M= R¹R₂SiO_{1/2},
D=R¹RSiO_{2/2},
T=R¹SiO_{3/2},
Q=SiO_{4/2}, worin
R = n-, iso-, tert.- oder C₁-C₁₂-Alkyl, C₁-C₁₂-Alkoxy(C₁-C₁₂)alkyl, C₅-C₃₀-Cycloalkyl oder C₆-C₃₀-Aryl, C₁-C₁₂-Alkyl(C₆-C₁₀)aryl, wobei diese Reste R gegebenenfalls jeweils durch eines oder mehrere F-Atome substituiert sein können und/oder eine oder mehrere -O-Gruppen enthalten können, R¹ = R oder ein unsubstituierter oder substituierter C₂-C₁₂Alkenylrest, R² = ein zweiwertig aliphatischer n-, iso-, tert.- oder cyclischer C₁-C₁₄-Alkylenrest, oder ein C₆-C₁₄-Arylen- bzw. Alkylenarylrest ist, der jeweils zwei Siloxyeinheiten M, D oder T verbrückt,
mit
m1 = 1-1000
a1 = 1-10
b1 = 0-3000
c1 = 0-50
d1 = 0 - 1
e1 = 0 - 300.

3. Verwendung nach Anspruch 1 oder 2, wobei die Komponente b) ein lineares, cyclisches oder verzweigtes SiH-haltiges Polyorganosiloxan der allgemeinen Formel (II) ist:
[Mₐ₄D_{b4}T_{c4}Q_{d4}R²ₑ₂]ₘ₃ (II)
worin
M = R³R₂SiO_{1/2},
D = R³RSiO_{2/2},
T = R³SiO_{3/2},
Q = SiO_{4/2}, worin
R = n-, iso-, tert.- oder C₁-C₁₂-Alkyl, C₁-C₁₂-Alkoxy(C₁-C₁₂)alkyl, C₅-C₃₀-Cycloalkyl oder C₆-C₃₀-Aryl, C₁-C₁₂-Alkyl(C₆-C₁₀)aryl, wobei diese Reste R gegebenenfalls jeweils durch eines oder mehrere F-Atome substituiert sein können und/oder eine oder mehrere -O-Gruppen enthalten können, R³ = R ist oder Wasserstoff,
R² = ein zweiwertiger aliphatischer n-, iso-, tert.- oder cyclischer C₁-C₁₄-Alkylenrest, oder ein C₆-C₁₄-Arylen- bzw. Alkylenarylrest ist, der jeweils zwei Siloxyeinheiten M, D oder T verbrückt,
m3 = 1 bis 1000
a4 = 1 bis 10
b4 = 0 bis 1000
c4 = 0 bis 50
d4 = 0 bis 1
e2 = 0 bis 300.

4. Verwendung nach einem der Ansprüche 1 bis 3, wobei die Komponente d) eine Metallverbindung mit mindestens einem sigma-gebundenen Alkyl- oder Arylrest ist.

5. Verwendung nach einem der Ansprüche 1 bis 4, wobei die Komponente d) eine Platin-Verbindu g ist.

6. Verwendung nach einem der Ansprüche 1 bis 5, wobei die Komponente d) (η⁵-Methylcyclopentadienyl)trimethyl-Platin ist.

7. Verwendung nach Anspruch 6, **dadurch gekennzeichnet, dass** die genannten oxidischen Füllstoffe mit mindestens einem reaktiven Silan oberflächenbehandelt sind.

8. Verwendung nach A spruch 7, **dadurch gekennzeichnet, dass** die genannten oxidischen Füllstoffe erhältlich sind durch ein Verfahren, dass die Schritte umfasst:
a. Vermischen mindestens eines reaktiven Silans i) mit mindestens einem oxidischen Füllstoff gegebenenfalls in Gegenwart von Wasser,
b. Abtrennen von in der Mischung enthaltenen niedrigsiedenden Bestandteilen,
c. Zugabe mindestens eines reaktiven Silans ii), ohne Zugabe von Wasser und gegebenenfalls Erwärmen der Mischung.

9. Verwendung nach einem der Ansprüche 1 bis 8, **dadurch gekennzeichnet, dass** die lichtaktivierbare, härtbare Zusammensetzung mit Licht einer Wellen-länge im Bereich von 200 bis 500 nm bestrahlt wird.

10. Verwendung nach Anspruch 9, **dadurch gekennzeichnet, dass** die lichtaktivierbare, härtbare Zusammensetzung in eine Form eingefüllt wird, deren Oberfläche mindestens einen Bereich aus einem UV-durchlässigen Material aufweist, dass aus Quarz oder UV-durchlässigen Kunststoffen besteht.

11. Verwendung nach Anspruch 9, **dadurch gekennzeichnet, dass** die Bestrahlungsdauer kürzer als die Gelzeit der härtbaren Siloxan-Zusammensetzung ist und die erhaltene, noch fließfähige Zusammensetzung in eine Form überführt oder auf ein Substrat aufgetragen wird und dann ohne weitere Bestrahlung gegebenenfalls bei erhöhter Temperatur ausgehärtet wird.

12. Verwendung nach Anspruch 10 oder 11, **dadurch gekennzeichnet, dass** die der Bestrahlung unterworfene lichthärtbare Zusammensetzung vor der Überführung in die Form bzw. vor dem Auftragen auf ein Substrat mit mindestens einem Pigment und/oder Füllstoff versetzt wird.

13. Verwendung nach einem der Ansprüche 1 bis 12 zur Herstellung von Hochspannungsisolatoren, Formed-in-place-Gaskete, prothetischen Formartikeln oder Abformungen oder einer Conformal-Coating-Beschichtung.

14. Verwendung nach einem der Ansprüche 1 bis 13, **daurch gekennzeichnet, dass** die dickwandigen Formartikel oder Beschichtungen eine Lichtdurchlässigkeit, gemessen bei einer Dicke von 10 mm von weniger als 10% aufweisen.

15. Verfahren zur Herstellung von dickwandigen Formartikeln, deren Volumen eine Kugel mit einem Durchmesser von mindestens 3 mm aufnehmen kann, **dadurch gekennzeichnet, dass** die lichtaktivierbare, härtbare Zusammensetzung, wie in einem der Ansprüche 1 bis 8 definiert, mit Licht einer Wellenlänge im Bereich von 200 bis 500 nm bestrahlt wird, wobei die Bestrahlungsdauer kürzer als die Gelzeit ist, die erhaltene Zusammensetzung anschließend in eine Form überführt und dann ohne weitere Bestrahlung gegebenenfalls bei erhöhter Temperatur ausgehärtet wird.

16. Verfahren nach Anspruch 15, **dadurch gekennzeichnet, dass** die der Bestrahlung unterworfene lichtaktivierbare, härlbare Zusammensetzung vor der Überführung in die Form mit mindestens einem Pigment und/oder Füllstoff versetzt wird.

17. Verfahren zur Herstellung von dickwandigen Formartikeln, deren Volumen eine Kugel mit einem Durchmesser von mindestens 3 mm aufnehmen kann, **dadurch gekennzeichnet, dass** die lichtaktivierbare, härtbare Zusammensetzung, wie in einem der Ansprüche 1 bis 8 definiert, in eine Form eingefüllt wird, deren Oberfläche mindestens einen Bereich aus einem UV-durchlässigen Material aufweist, dass aus Quarz oder UV-durchlässigen Kunststoffen besteht, und mit Licht einer Wellenlänge im Bereich von 200 bis 500 nm bestrahlt wird.

18. Verfahren bzw. Verwendung nach einem der Ansprüche 1 bis 17, **dadurch gekennzeichnet, daß** die Lichtaktivierung der lichtaktivierbaren, härtbaren Zusammensetzung mit UV-Bestrahlung erfolgt.

19. Verfahren bzw. Verwendung nach einem der Ansprüche 1 bis 18, **dadurch gekennzeichnet, daß** die Lichtaktivierung mit einer UV-Strahlenquelle ausgewählt aus Xenon- Quecksilber-, Schwarzlicht- und Eximerlampen durchgeführt wird.

20. Dickwandige Formartikel, erhältlich nach dem Verfahren nach einem der Ansprüche 15 bis 19.

21. Dickwandiger Formartikel nach Anspruch 20, der ein Hochspannungs-isolator oder eine Formed-in-place-Gasket ist.

22. Dickwandige Formartikel nach Anspruch 20 die eine Lichtdurchlässigkeit, gemessen bei einer Dicke von 10 mm, von weniger als 10% aufweisen.

## Claims

1. The use of a light-activatable, curable siloxane composition, comprising:
a) 3 to 99 % by weight of at least one polyorganosiloxane having an average of at least two unsaturated organic groups per molecule, where the polyorganosiloxane is a polysiloxane containing alkenyl groups
b) 0.2 to 60 % by weight of at least one polyhydroorganosiloxane having an average of at least two SiH groups per molecule,
c) 0.1 to 60 % by weight of at least one oxidic filler whose BET surface area is from 50 to 400 m²/g,
d) at least one photo-activatable catalyst, comprising a metal selected from the group consisting of Pt, Ru, Rh, Pd, Ir or Ni, or a compound of the metal mentioned, corresponding to a metal content of 1 to 500 ppm,
e) 0 to 30 % by weight of one or more auxiliaries,
in each case relative to the total amount of the components a) to c), for production of thick-walled moulding products, the volume of which is capable of accommodating a sphere having a diameter of at least 3 mm.

2. The use according to claim 1, where component a) is a polyorganosiloxane of the formula (I) containing alkenyl groups
[Mₐ₁D_{b1}Tₑ₁Q_{d1}R²ₑ₁]ₘ₁ (I)
in which
M = R¹R₂SiO_{1/2},
D = R¹RSiO_{2/2},
T = R¹SiO_{3/2},
Q = SiO_{4/2}, in which
R = n-, iso-, tert- or C₁-C₁₂-alkyl, C₁-C₁₂-alkoxy(C₁-C₁₂)alkyl, C₅-C₃₀-cycloalkyl or C₆-C₃₀-aryl, C₁-C₁₂-alkyl(C₆-C₁₀)aryl, wherein each of these radicals R can optionally be substituted by one or more F atoms and/or can contain one or more -O- groups,
R¹ = R or an unsubstituted or substituted C₂-C₁₂-alkenyl radical,
R² = a divalent aliphatic n-, iso-, tert-, or cyclic C₁-C₁₄-alkylene radical, or a C₆-C₁₄-arylene or, respectively, alkylenearyl radical, which in each case bridges two siloxy units M, D or T,
where
m1 = 1-1000
a1 = 1-10
b1 = 0-3000
c1 = 0-50
d1 = 0-1
e1 = 0-300.

3. The use according to claim 1 or 2, where component b) is a linear, cyclic, or branched SiH-containing polyorganosiloxane of the general formula (II):
[Mₐ₄D_{b4}T_{c4}Q_{d4}R²ₑ₂]ₘ₃ (II)
in which
M = R³R₂SiO_{1/2},
D = R³RSiO_{2/2},
T = R³SiO_{3/2},
Q = SiO_{4/2}, in which
R = n-, iso-, tert- or C₁-C₁₂-alkyl, C₁-C₁₂-alkoxy(C₁-C₁₂)alkyl, C₅-C₃₀-cycloalkyl or C₆-C₃₀-aryl, C₁-C₁₂-alkyl(C₆-C₁₀)aryl, wherein each of these radicals R can optionally be substituted by one or more F atoms and/or can contain one or more -O- groups,
R³ = R or hydrogen,
R² = a divalent aliphatic n-, iso-, tert-, or cyclic C₁-C₁₄-alkylene radical, or a C₆-C₁₄-arylene or, respectively, alkylenearyl radical, which in each case bridges two siloxy units M, D or T,
where
m3 = from 1 to 1000
a4 = from 1 to 10
b4 = from 0 to 1000
c4 = from 0 to 50
d4 = from 0 to 1
e2 = from 0 to 300.

4. The use according to any of claims 1 to 3, where component d) is a metal compound having at least one sigma-bonded alkyl or aryl radical.

5. The use according to any of claims 1 to 4, where component d) is a platinum compound.

6. The use according to any of claims 1 to 5, where component d) is (η⁵-methylcyclopentadienyl)trimethylplatinum.

7. The use according to claim 6, **characterised in that** the oxidic fillers mentioned have been surface-treated with at least one reactive silane.

8. The use according to claim 7, **characterised in that** the oxidic fillers mentioned are obtainable via a process which encompasses the following steps:
a. mixing of at least one reactive silane i) with at least one oxidic filler, if appropriate in the presence of water,
b. removal of low-boiling-point constituents contained in the mixture,
c. addition of at least one reactive silane ii), without addition of water and, if appropriate, heating of the mixture.

9. The use according to any of claims 1 to 8, **characterised in that** the light-activatable, curable composition is irradiated with light whose wavelength is in the range from 200 to 500 nm.

10. The use according to claim 9, **characterised in that** the light-activatable, curable composition is charged to a mould whose surface has at least one region composed of a UV-permeable material, which is composed of quartz or of UV-permeable plastics.

11. The use according to claim 9, **characterised in that** the irradiation time is shorter than the gel time of the curable siloxane composition, and the resultant, still flowable composition is transferred to a mould or applied to a substrate, and then, without further irradiation, is cured if appropriate at an elevated temperature.

12. The use according to claim 1 0 or 11, **characterised in that,** prior to transfer to the mould or prior to application to a substrate, the light-curable composition subjected to irradiation is admixed with at least one pigment and/or filler.

13. The use according to any of claims 1 to 1 2 for production of high-voltage insulators, of formed-in-place gaskets, of prosthetic moulding products or impressions, or of a conformal coating.

14. The use according to any of claims 1 to 13, **characterised in that** the light transmittance of the thick-walled moulding products or coatings is less than 10%, measured at 10 mm thickness.

15. A process for production of thick-walled moulding products whose volume is capable of accommodating a sphere having a diameter of at least 3 mm, **characterised in that** the light-activatable, curable composition, as defined in any of claims 1 to 8, is irradiated with light whose wavelength is in the range from 200 to 500 nm, the irradiation time being shorter than the gel time, the resultant composition is then transferred to a mould, and then, without further irradiation, is cured if appropriate at an elevated temperature.

16. The process according to claim 15, **characterised in that,** prior to transfer to the mould, the light-activatable, curable composition subjected to irradiation is admixed with at least one pigment and/or filler.

17. A process for production of thick-walled moulding products whose volume is capable of accommodating a sphere having a diameter of at least 3 mm, **characterised in that** the light-activatable, curable composition, as defined in any of claims 1 to 8, is charged to a mould whose surface has at least one region composed of a UV-permeable material which is composed of quartz or of UV-permeable plastics, and is irradiated with light whose wavelength is in the range from 200 to 500 nm.

18. The process or use according to any of claims 1 to 1 7, **characterised in that** the light-activation of the light-activatable, curable composition takes place with UV irradiation.

19. The process or use according to any of claims 1 to 18, **characterised in that** the light-activation is carried out with a UV radiation source selected from xenon lamps, mercury lamps, black-light lamps, and excimer lamps.

20. Thick-walled moulding products, obtainable by the process according to any of claims 15 to 19.

21. The thick-walled moulding product according to claim 20, which is a high-voltage insulator or a formed-in-place gasket.

22. Thick-walled moulding products according to claim 20, whose light transmittance is less than 10%, measured at 10 mm thickness.

## Revendications

1. Utilisation d'une composition de siloxane activable par la lumière et durcissable, contenant :
a) 3 à 99 % en poids d'au moins un poly(organosiloxane) ayant, en moyenne, au moins deux groupements organiques insaturés par molécule, le polyorganosiloxane en question étant un polysiloxane contenant des groupements alcényle,
b) 0,2 à 60 % en poids d'au moins un poly(hydrogéno-organosiloxane) ayant, en moyenne, au moins deux groupements SiH par molécule,
c) 0,1 à 60 % en poids d'au moins une charge oxydante présentant une surface BET de 50 à 400 m²/g,
d) au moins un catalyseur photo-activable, contenant un métal choisi dans le groupe constitué des éléments Pt, Ru, Rh, Pd, Ir ou Ni, ou un composé du métal cité, correspondant à une teneur en métal de 1 à 500 ppm,
e) 0 à 30 % en poids d'un ou de plusieurs adjuvants,
respectivement par rapport à la quantité totale des composants a) à c),
pour la fabrication d'articles moulés à paroi épaisse, dont le volume peut accueillir une sphère présentant un diamètre d'au moins 3 mm.

2. Utilisation selon la revendication 1, dans laquelle le composant a) est un poly(organosiloxane) contenant des groupements alcényle de formule (I) :
[Mₐ₁D_{b1}T_{c1}Q_{d1}R²ₑ₁]ₘ₁ (I)
dans laquelle
M = R¹R₂SiO_{1/2},
D = R¹RSiO_{2/2},
T = R¹SiO_{3/2},
Q = SiO_{4/2}, où
R représente un groupement de type n-, iso-, tert- ou alkyle en C₁-C₁₂, un groupement alcoxy(C₁-C₁₂)-alkyle(C₁-C₁₂), un cycloalkyle en C₅-C₃₀ ou un aryle en C₆-C₃₀, un alkyle(C₁-C₁₂)-aryle(C₆-C₁₀), ces radicaux R pouvant éventuellement être substitués, respectivement, par un ou plusieurs atomes de fluor et/ou pouvant contenir un ou plusieurs groupements -O-,
R¹ représente R ou un radical alcényle en C₂-C₁₂ non substitué ou substitué,
R² représente un radical alkylène divalent aliphatique en C₁-C₁₄ de forme n-, iso-, tert- ou cyclique, ou un radical arylène ou alkylénaryle en C₆-C₁₄, qui forme un pont entre, respectivement, deux unités siloxy M, D ou T,
avec
m1 = 1 à 1000
a1 = 1 à 10
b1 = 0 à 3000
c1 = 0 à 50
d1 = 0 à 1
e1 = 0 à 300.

3. Utilisation selon la revendication 1 ou 2, dans laquelle le composant b) est un poly(organosyloxane) linéaire, cyclique ou ramifié, contenant des groupements SiH, de formule générale (II) :
[Mₐ₄D_{b4}T_{c4}Q_{d4}R²ₑ₂]ₘ₃ (II)
dans laquelle
M = R³R₂SiO_{1/2},
D = R³RSiO_{2/2},
T = R³SiO_{3/2},
Q = SiO_{4/2}, où
R représente un groupement de type n-, iso-, tert- ou alkyle en C₁-C₁₂ ou un alcoxy(C₁-C₁₂)-alkyle(C₁-C₁₂), un cycloalkyle en C₅-C₃₀ ou un aryle en C₆-C₃₀, un alkyle(C₁-C₁₂)-aryle(C₆-C₁₀,), ces radicaux R pouvant éventuellement être substitués, respectivement, par un ou plusieurs atomes de fluor et/ou pouvant contenir un ou plusieurs groupements -O-,
R³ représente R ou l'hydrogène,
R² représente un radical alkylène divalent aliphatique en C₁-C₁₄ de forme n-, iso-, tert- ou cyclique, ou un radical arylène ou alkylénaryle en C₆-C₁₄, qui forme un pont avec, respectivement, deux unités siloxy M, D ou T,
avec
m3 = 1 à 1000
a4 = 1 à 10
b4 = 0 à 1000
c4 = 0 à 50
d4 = 0 à 1
e2 = 0 à 300.

4. Utilisation selon l'une quelconque des revendications 1 à 3, dans laquelle le composant d) est un composé métallique ayant au moins un radical alkyle ou aryle relié en position sigma.

5. Utilisation selon l'une quelconque des revendications 1 à 4, dans laquelle le composant d) est un composé de platine.

6. Utilisation selon l'une quelconque des revendications 1 à 5, dans laquelle le composé d) est le (η⁵-méthylcyclopentadiényl)triméthyle-platine.

7. Utilisation selon la revendication 6, **caractérisée en ce que** les charges oxydantes citées sont traitées en surface avec au moins un silane réactif.

8. Utilisation selon la revendication 7, **caractérisée en ce que** l'on peut obtenir les charges oxydantes citées par le biais d'un procédé qui comprend les étapes consistant à :
a) mélanger au moins un silane réactif i) à au moins une charge oxydante, éventuellement, en présence d'eau,
b) séparer les constituants à bas point d'ébullition, contenus dans le mélange,
c) ajouter au moins un silane réactif ii), sans ajouter d'eau et, éventuellement, chauffer le mélange.

9. Utilisation selon l'une quelconque des revendications 1 à 8, **caractérisée en ce que** la composition activable par la lumière et durcissable est exposée à une lumière présentant une longueur d'onde dans la plage de 200 à 500 nm.

10. Utilisation selon la revendication 9, **caractérisée en ce que** la composition activable par la lumière et durcissable est versée dans un moule, dont la surface présente au moins une zone formée à partir d'un matériau perméable au rayonnement UV, qui est constitué de quartz ou de matériaux synthétiques perméables au rayonnement UV.

11. Utilisation selon la revendication 9, **caractérisée en ce que** la durée d'exposition est plus courte que le temps de gélification de la composition de siloxane durcissable et **en ce que** la composition obtenue, encore coulante, est transférée dans un moule ou appliquée sur un substrat, puis durcie sans autre exposition à un rayonnement, éventuellement, à une température plus élevée.

12. Utilisation selon la revendication 10 ou 11, **caractérisée en ce que** la composition durcissable à la lumière soumise au rayonnement, est mélangée à au moins un pigment et/ou une charge avant d'être transférée dans le moule ou d'être appliquée sur un substrat.

13. Utilisation selon l'une quelconque des revendications 1 à 12, pour la fabrication d'isolateurs à haute tension, de joints formés in situ, d'articles prothétiques moulés, de moulages ou d'un revêtement d'enduction conforme.

14. Utilisation selon l'une quelconque des revendications 1 à 13, **caractérisée en ce que** les articles moulés à paroi épaisse ou les revêtements présentent une transparence, mesurée à une épaisseur de 10 mm, inférieure à 10%.

15. Procédé de fabrication d'articles moulés à paroi épaisse, dont le volume peut accueillir une sphère présentant un diamètre d'au moins 3 mm, **caractérisé en ce que** la composition activable par la lumière et durcissable, telle qu'elle est définie selon l'une quelconque des revendications 1 à 8, est exposée à une lumière présentant une longueur d'onde dans la plage de 200 à 500 nm, la durée d'exposition étant inférieure au temps de gélification, la composition obtenue étant ensuite transférée dans un moule, puis durcie sans autre exposition à un rayonnement, éventuellement, à une température plus élevée.

16. Procédé selon la revendication 15, **caractérisé en ce que** la composition activable par la lumière, durcissable et soumise au rayonnement, est mélangée à au moins un pigment et/ou une charge avant d'être transférée dans le moule.

17. Procédé de fabrication d'articles moulés à paroi épaisse, dont le volume peut accueillir une sphère d'un diamètre d'au moins 3 mm, **caractérisé en ce que** la composition activable par la lumière et durcissable, telle qu'elle est définie selon l'une quelconque des revendications 1 à 8, est versée dans un moule, dont la surface présente au moins une zone formée d'un matériau perméable au rayonnement UV, qui est constitué de quartz et de matériaux synthétiques perméables au rayonnement UV, et est exposée à une lumière présentant une longueur d'onde dans la plage de 200 à 500 nm.

18. Procédé ou utilisation selon l'une quelconque des revendications 1 à 17, **caractérisé(e) en ce que** l'activation par la lumière de la composition activable par la lumière et durcissable se fait par le biais d'un rayonnement UV.

19. Procédé ou utilisation selon l'une quelconque des revendications 1 à 18, **caractérisé(e) en ce que** l'activation par la lumière est réalisée en utilisant une source de rayonnement UV choisie parmi les lampes au xénon, au mercure, à la lumière noire et à excimère.

20. Article moulé à paroi épaisse pouvant être obtenu par le procédé selon l'une quelconque des revendications 15 à 19.

21. Article moulé à paroi épaisse selon la revendication 20, qui est un isolateur à haute tension ou un joint formé in situ.

22. Articles moulés à paroi épaisse selon la revendication 20, qui présentent une transparence, mesurée à une épaisseur de 10 mm, inférieure à 10%.
